# EUROPEAN PATENT APPLICATION

(11) **EP 4 776 216 A1**
(43) Date of publication of application: **15.07.2026**
(21) Application number: 24860015.7
(22) Date of filing: 03.09.2024
(51) Int. Cl.: G06Q 50/18

(54) **PROGRAM, DEVICE, PATENT EVALUATION METHOD, AND METHOD FOR SELECTING TARGET COMPANY FOR INVESTMENT, LOAN, STOCK TRADE, BOND TRADE, AND M&A**

(30) Priority: 03.09.2023 JP 2023142629
(71) Applicant: IP Survey Inc., Yokohama-shi, Kanagawa 220-0004 (JP)
(72) Inventor: MIYAZAWA Takashi, Yokohama-shi, Kanagawa 220-0004 (JP); KAGEYAMA Koji, Yokohama City, Kanagawa 220-0004 (JP); MOTOORI Ran, Yokohama City, Kanagawa 220-0004 (JP)
(74) Representative: Ziebig Hengelhaupt Intellectual Property Attorneys Patentanwaltskanzlei PartGmbB
(86) International application number: PCT/JP2024/080152
(87) International publication number: WO 2025/047992

(57) **Abstract**

A program collects information related to intellectual property competitiveness of a company or the like from patent gazettes or the like. The program collects at least one of: a total number of claims; a total number of claim categories; a total number of independent claims; a total number of dependent claims; a maximum number of independent claims within the same claim category; a total number of claims in a claim category identical or related to a designated product or a designated service; a total number of independent claims in the claim category identical or related to the designated product or the designated service; and a total number of dependent claims in the claim category identical or related to the designated product or the designated service, from a scope of claims of each of a plurality of patent gazettes or a plurality of published patent applications converted into electronic data.

## Description

### Technical Field

Some aspects of the present invention relate to a determination method, an evaluation method, a program, a system, and a device such as a server or a computer.

### Background Art

Patent-related information is extremely important in estimating a technical capability or a technical asset of a target company in selecting a target company for financing, investment, stock trading, or bond trading, in creating a package of an investment product, and in due diligence for M&A or listing; however, there has been almost no objective index showing a high possibility of contributing to an expansion or maintenance of a business of the target company or winning a patent lawsuit, and a current situation has forced a reliance on subjective evaluations by individuals.

### Citation List

### Patent Literature

[Patent Literature 1] Japanese Unexamined Patent Application Publication No. 2021-086238
[Patent Literature 2] Japanese Unexamined Patent Application Publication No. 2020-166902

### Summary of Invention

### Technical Problem

One object of some aspects of the present invention is to provide an objective index of patent competitiveness. Another object is to provide an efficient computer-implemented method for evaluating intellectual property and determining competitiveness of patent rights when selecting a company for investment, financing, stock trading, bond trading, or M&A. Conventional evaluations rely heavily on subjective judgment and do not provide systematic criteria for whether a patent contributes to commercial success, resists invalidation, or supports portfolio decisions.

### Solution to Problem

A program according to some aspects of the present invention, executed on an information-processing device, implements a first collection step of automatically collecting, from electronic patent documents, at least one first parameter. Phrased differently, a program according to some aspects of the present invention implements a first collection step of collecting, for a plurality of patent gazettes, a plurality of published patent applications, or a plurality of published Japanese translations of a PCT international publication converted into electronic data, at least one first parameter among a plurality of first parameters consisting of a total number of claims, a total number of claim categories, a total number of independent claims, a total number of dependent claims, a maximum number of independent claims within the same claim category regarding a scope of claims of each of them, a total number of claims in a claim category the same as or related to a specified designated product, a designated technology, or a designated service, a total number of independent claims in the claim category same as or related to the specified designated product, the designated technology, or the designated service, and a total number of dependent claims in the claim category same as or related to the specified designated product, the designated technology, or the designated service. Note that, in some aspects of the present invention, a patent gazette, a published patent application, and a published Japanese translations of a PCT international publication are not limited to those issued by the Japan Patent Office, but may be those issued by patent offices of major countries such as the United States, China, South Korea, European countries, and other countries. Phrased differently, the invention provides a program, method, and device that automatically process patent documents converted into electronic data and extract a plurality of parameters related to the structure and content of the claims. Thus, the program, method, and device according to the invention are implemented using a computing system that processes electronic patent data. Patent gazettes, published patent applications, and Japanese translations of PCT publications are provided in the form of machine-readable electronic data, and the program automatically parses and extracts structural and numerical information from these electronic sources. The invention therefore enables automated large-scale processing of patent information. During execution, the program operates on electronically stored patent data, extracts claim-related parameters, identifies applicants or patentees, and determines cited prior-art documents referenced during examination. The extracted parameters and intermediate results are stored in a computer-readable memory and are further processed by computational routines executed on processing circuitry of the device. In particular, the program carries out machine-implemented numerical transformations, including:
- automatic counting of claims, claim categories, independent and dependent claims, and category-specific claims;
- automatic extraction of the number of cited prior-art documents;
- calculation of ratios between parameters;
- calculation of correlation coefficients;
- execution of statistical significance tests (e.g., p-value computation).
These numerical transformations are performed algorithmically by the processor on stored electronic data, thereby reducing the need for manual evaluation and enabling deterministic and reproducible parameter analysis for large patent datasets. Because the program processes hundreds or thousands of patent documents, the invention provides technical advantages such as:
- improved processing efficiency when analysing large-volume patent data;
- increased accuracy in parameter extraction due to automated parsing of machine-readable patent texts;
- reduction of manual workload in evaluating complex claim structures across large portfolios;
- consistent and reproducible outputs, enabling reliable portfolio comparison;
- automated benchmark generation, where stored parameter sets may serve as reference values for evaluating new applicants, technologies, or designated products.
The device used to perform the invention may comprise processing circuitry configured to execute the program, a memory storing the electronic patent data and intermediate results, and interfaces for retrieving patent data from electronic patent databases. The system may further output processed results, correlation values, ratios, and statistical indicators in structured data formats, enabling downstream use in portfolio evaluation, visualization, and selection of companies for investment, financing, stock trading, bond trading, or M&A activities. By automating these computational tasks on electronic data, the invention provides a technical system that facilitates objective evaluation of patent competitiveness, robustness, drafting accuracy, and basic inventiveness. The automated processing of electronic patent datasets constitutes a technical effect independent of any business-related interpretation applied to the results.

In the above-mentioned program, a designated service may include, for example, a service, a business model, and a business.

The above-mentioned program produces an effect such as being able to quickly collect information regarding effectiveness as a patent right, such as competitiveness of a patent or robustness against an invalidity claim or invalidation.

In the above-mentioned program, it is preferable to further implement a specifying step of specifying an applicant or a patentee for each of the plurality of patent gazettes, the published patent applications, or the published Japanese translations of a PCT international publication.

By specifying an applicant or a patentee with the above-mentioned program, it becomes possible to obtain, for example, information regarding a relationship between information regarding effectiveness as a patent right such as competitiveness of a patent or robustness and the applicant or the patentee. Therefore, the program is effective, for example, in specifying a patent or a patent application that is a base of a business, or in selecting a patent or a patent application to be presented to an alleged infringer or a negotiation partner when performing a patent lawsuit or a license negotiation. Also, for example, it can be used as an index of quality of a patent practice from a viewpoint of obtaining an exclusive monopoly right which is an original purpose of obtaining a patent, and a viewpoint of resistance against patent invalidation which is a premise for exercising a right.

The information obtained by correlating patent-effectiveness indicators with the applicant or patentee can provide important insight when selecting a company as a target for investment, financing, stock trading, bond trading, or M&A, or when conducting due diligence for listing.

In the above-mentioned program, it is preferable to implement a first extraction step of extracting the plurality of patent gazettes, the plurality of published patent applications, or the plurality of published Japanese translations of a PCT international publication as ones corresponding to a plurality of patent applications having a company, an individual, or an institution specified as an investigation target as an applicant or a patentee.

The at least one first parameter among the plurality of first parameters for the plurality of patent applications having the company, the individual, or the institution specified as the investigation target as the applicant or the patentee, which is obtained by the above-mentioned program, may be used, for example, as a benchmark of another company, individual, or institution. By setting an applicant or a patentee to be a benchmark to be, for example, a competitor of a product or a service or a business of one's own company, it is possible to evaluate patent strength or the like between the competitor and the one's own company in the product or the service.

By the above-mentioned program, it is preferable to further implement a second collection step of collecting, as a second parameter, a number of cited documents that is a number of prior art documents cited in examination at a patent office for a plurality of patent applications corresponding to the plurality of patent gazettes, the plurality of published patent applications, or the plurality of published Japanese translations of a PCT international publication, for the plurality of patent gazettes, the plurality of published patent applications, or the plurality of published Japanese translations of a PCT international publication.

In the above-mentioned program, the number of cited documents cited by an examiner in examination can be obtained, for example, by counting references in a Japanese patent gazette. Also, in a patent gazette of the United States, a document cited by an examiner in examination can be obtained, for example, by counting documents marked with "*" showing that it was cited by the examiner among "References Cited".

Since a cited document is, for example, a kind of obstacle when an applicant obtains a patent, a number of cited documents can be considered to correspond to, for example, a degree of an obstacle or a constraint when an applicant obtains a patent.

In the above-mentioned program, it is preferable to implement a specifying step of specifying the designated product or the designated service based on a company, an individual, or an institution to be investigated, or a product manufactured or sold or a business or a service performed by a company, an individual, or an institution to be investigated.

In the above-mentioned program, it is preferable to implement a selection step of selecting the designated product or the designated service based on an investigation result from a database converted into electronic data or the Internet regarding a company, an individual, or an institution to be investigated, or a product manufactured or sold or a service performed by a company, an individual, or an institution to be investigated.

In the above-mentioned program, it is preferable to further implement a first calculation step of calculating, as a third parameter, a p-value regarding a correlation between the second parameter and a value of the at least one first parameter. For example, when the at least one first parameter is related to a number of independent claims (e.g., a total number of independent claims, a maximum number of independent claims within the same claim, a total number of independent claims in a claim category the same as or related to a specified designated product, a designated technology, or a designated service, etc.), strength of a correlation with the second parameter is considered to correspond to a result or an attempt of maximizing a scope of a patent right by an applicant or a patentee against an obstacle or a constraint in obtaining a patent called a cited document.

For example, when the at least one first parameter is related to a number of dependent claims (e.g., a total number of dependent claims, a total number of dependent claims in a claim category the same as or related to a specified designated product, a designated technology, or a designated service, etc.), strength of a correlation with the second parameter is considered to correspond to a result or an attempt of ensuring resistance against an invalidity claim or invalidation by an applicant or a patentee against an obstacle or a constraint in obtaining a patent called a cited document.

In the above-mentioned program, it is preferable to implement a second calculation step of calculating a correlation coefficient as a fourth parameter regarding a correlation between the second parameter and a value of the at least one first parameter. The above-mentioned correlation coefficient can be used as, for example, an index of a result or an attempt of maximizing a scope of a patent right by an applicant or a patentee against an obstacle or a constraint in obtaining a patent called a cited document, or an index of a result or an attempt of ensuring resistance against an invalidity claim or invalidation by an applicant or a patentee against an obstacle or a constraint in obtaining a patent called a cited document.

In the above-mentioned program, it is preferable to further implement a third calculation step of calculating a ratio between the second parameter and the at least one first parameter as a fifth parameter. The above-mentioned ratio can be used as, for example, an index of a result or an attempt of maximizing a scope of a patent right by an applicant or a patentee against an obstacle or a constraint in obtaining a patent called a cited document, or an index of a result or an attempt of ensuring resistance against an invalidity claim or invalidation by an applicant or a patentee against an obstacle or a constraint in obtaining a patent called a cited document.

In the above-mentioned program, it is preferable that the plurality of patent gazettes, the plurality of published patent applications, or the plurality of published Japanese translations of a PCT international publication include at least a plurality of first patent gazettes, a plurality of first published patent applications, or a plurality of first published Japanese translations of a PCT international publication belonging to a first group and a plurality of second patent gazettes, a plurality of second published patent applications, or a plurality of second published Japanese translations of a PCT international publication belonging to a second group, and a first test step of testing for a significant difference between the first group and the second group of the at least one first parameter is implemented.

In the above-mentioned program, it is preferable that the plurality of patent gazettes, the plurality of published patent applications, or the plurality of published Japanese translations of a PCT international publication include at least a plurality of first patent gazettes, a plurality of first published patent applications, or a plurality of first published Japanese translations of a PCT international publication belonging to a first group and a plurality of second patent gazettes, a plurality of second published patent applications, or a plurality of second published Japanese translations of a PCT international publication belonging to a second group, and a second test step of testing for a significant difference between the first group and the second group of the second parameter is implemented.

In the above-mentioned program, it is preferable that the plurality of patent gazettes, the plurality of published patent applications, or the plurality of published Japanese translations of a PCT international publication include at least a plurality of first patent gazettes, a plurality of first published patent applications, or a plurality of first published Japanese translations of a PCT international publication belonging to a first group and a plurality of second patent gazettes, a plurality of second published patent applications, or a plurality of second published Japanese translations of a PCT international publication belonging to a second group, and a third test step of testing for a significant difference between the first group and the second group of the third parameter is implemented.

In the above-mentioned program, it is preferable that the plurality of patent gazettes, the plurality of published patent applications, or the plurality of published Japanese translations of a PCT international publication include at least a plurality of first patent gazettes, a plurality of first published patent applications, or a plurality of first published Japanese translations of a PCT international publication belonging to a first group and a plurality of second patent gazettes, a plurality of second published patent applications, or a plurality of second published Japanese translations of a PCT international publication belonging to a second group, and a fourth test step of testing for a significant difference between the first group and the second group of the fourth parameter is implemented.

In the above-mentioned program, it is preferable that the plurality of patent gazettes, the plurality of published patent applications, or the plurality of published Japanese translations of a PCT international publication include at least a plurality of first patent gazettes, a plurality of first published patent applications, or a plurality of first published Japanese translations of a PCT international publication belonging to a first group and a plurality of second patent gazettes, a plurality of second published patent applications, or a plurality of second published Japanese translations of a PCT international publication belonging to a second group, and a fifth test step of testing for a significant difference between the first group and the second group of the fifth parameter is implemented.

In the above-mentioned program, preferably the plurality of first patent gazettes, the plurality of first published patent applications, or the plurality of first published Japanese translations of a PCT international publication belonging to the first group may belong to a first applicant or a first patent right holder, and the plurality of second patent gazettes, the plurality of second published patent applications, or the plurality of second published Japanese translations of a PCT international publication belonging to the second group may belong to a second applicant or a second patent right holder; in this case, a difference in the at least one parameter by an applicant or a patentee can be quantitatively investigated.

In the above-mentioned program, for example, the plurality of first patent gazettes, the plurality of first published patent applications, or the plurality of first published Japanese translations of a PCT international publication belonging to the first group may relate to a first product, a first service, or a first utility, and the plurality of second patent gazettes, the plurality of second published patent applications, or the plurality of second published Japanese translations of a PCT international publication belonging to the second group may relate to a second product, a second service, or a second utility; in this case, a difference in the at least one parameter by a product, a service, or a utility can be quantitatively investigated.

In the above-mentioned program, for example, the plurality of first patent gazettes, the plurality of first published patent applications, or the plurality of first published Japanese translations of a PCT international publication belonging to the first group may relate to a period corresponding to a first stage in a product life stage, and the plurality of second patent gazettes, the plurality of second published patent applications, or the plurality of second published Japanese translations of a PCT international publication belonging to the second group may relate to a period corresponding to a first stage in a product life stage; in this case, a difference in the at least one parameter by a product life stage can be quantitatively investigated.

In the above-mentioned program, it is preferable to include a second extraction step of extracting the plurality of patent gazettes, the plurality of published patent applications, or the published Japanese translations of a PCT international publication as ones corresponding to a patent targeted in a patent infringement lawsuit filed in a court or a trial request or a petition to a patent office.

In the above-mentioned program, it is preferable to include a third extraction step of extracting a target patent that is a patent targeted in a plurality of patent infringement lawsuits filed in a court or trial requests or petitions to a patent office using a database converted into electronic data or the Internet, and extracting the plurality of patent gazettes, the plurality of published patent applications, or the published Japanese translations of a PCT international publication as ones corresponding to the target patent.

In the above-mentioned program, it is preferable to include a fourth extraction step of extracting an applicant of the plurality of first patent gazettes, the plurality of first published patent applications, or the plurality of first published Japanese translations of a PCT international publication as a first applicant or a first patentee, and a fifth extraction step of extracting an applicant of the plurality of second patent gazettes, the plurality of second published patent applications, or the plurality of second published Japanese translations of a PCT international publication as a second applicant.

In the above-mentioned program, it is preferable to further include a storage step of storing at least a part of an implementation process or a result of the first data collection step.

In the above-mentioned program, it is preferable to further include a storage step of storing at least a part of an implementation process or a result of the specifying step.

In the above-mentioned program, it is preferable to further include a storage step of storing at least a part of an implementation process or a result of the first extraction step.

In the above-mentioned program, it is preferable to further include a storage step of storing at least a part of an implementation process or a result of the two data collection steps.

In the above-mentioned program, it is preferable to further include a storage step of storing at least a part of an implementation process or a result of the specifying step.

In the above-mentioned program, it is preferable to further include a storage step of storing at least a part of an implementation process or a result of the selection step.

In the above-mentioned program, it is preferable to further include a storage step of storing at least a part of an implementation process or a result of the first calculation step.

In the above-mentioned program, it is preferable to further include a storage step of storing at least a part of an implementation process or a result of the second calculation step.

In the above-mentioned program, it is preferable to further include a storage step of storing at least a part of an implementation process or a result of the third calculation step.

In the above-mentioned program, it is preferable to further include a storage step of storing at least a part of an implementation process or a result of the first test step.

In the above-mentioned program, it is preferable to further include a storage step of storing at least a part of an implementation process or a result of the second test step.

In the above-mentioned program, it is preferable to further include a storage step of storing at least a part of an implementation process or a result of the third test step.

In the above-mentioned program, it is preferable to further include a storage step of storing at least a part of an implementation process or a result of the fourth test step.

In the above-mentioned program, it is preferable to further include a storage step of storing at least a part of an implementation process or a result of the fifth test step.

In the above-mentioned program, it is preferable to further include a storage step of storing at least a part of an implementation process or a result of the second extraction step.

In the above-mentioned program, it is preferable to further include a storage step of storing at least a part of an implementation process or a result of the third extraction step.

In the above-mentioned program, it is preferable to further include a storage step of storing at least a part of an implementation process or a result of the fourth extraction step.

In the above-mentioned program, it is preferable to further include a storage step of storing at least a part of an implementation process or a result of the fifth extraction step.

In the above-mentioned program, it is preferable to implement a storage step of storing at least a part of an implementation process or a result for at least one of the first data collection step, the specifying step, the first extraction step, the second data collection step, the specifying step, the selection step, the first calculation step, the second calculation step, the third calculation step, the first test step, the second test step, the third test step, the fourth test step, the fifth test step, the second extraction step, the third extraction step, the fourth extraction step, and the fifth extraction step.

In the above-mentioned program, it is preferable to set at least a part of the implementation process or the result of the storage step as benchmark or reference data.

In the above-mentioned program, it is preferable to implement analysis or analytical study using at least one first data obtained for the plurality of first patent gazettes, the plurality of first published patent applications, or the plurality of first published Japanese translations of a PCT international publication as a benchmark for at least one second data obtained for the plurality of second patent gazettes, the plurality of second published patent applications, or the plurality of second published Japanese translations of a PCT international publication.

A program according to some aspects of the present invention extracts, using a database converted into electronic data or the Internet, a plurality of target patents that are patents targeted in a plurality of patent infringement lawsuits filed in a court or a plurality of trial requests or a plurality of petitions to a patent office, and identifies, among the plurality of target patents, a plurality of winning patents that are patents targeted in patent infringement lawsuits in which a patent right holder won, or a plurality of maintained patents that are patents maintained in the plurality of trial requests or the plurality of petitions, and a plurality of losing patents that are patents targeted in patent infringement lawsuits in which the patent right holder lost, or a plurality of invalidated patents that are patents not maintained in the plurality of trial requests or the plurality of petitions, and extracts a plurality of first patent gazettes, a plurality of first published patent applications, or a plurality of first published Japanese translations of a PCT international publication corresponding to the plurality of winning patents or the plurality of maintained patents, and extracts a plurality of second patent gazettes, a plurality of second published patent applications, or a plurality of second published Japanese translations of a PCT international publication corresponding to the plurality of losing patents or the plurality of invalidated patents, and collects, as a second parameter, a number of cited documents that is a number of prior art documents cited in examination at a patent office for a patent application of at least one first parameter among a plurality of first parameters consisting of a total number of claims, a total number of claim categories, a total number of independent claims, a total number of dependent claims, a maximum number of independent claims within the same claim category regarding a scope of claims of the plurality of first patent gazettes, the plurality of first published patent applications, or the plurality of first published Japanese translations of a PCT international publication, a total number of claims in a claim category the same as or related to a specified designated product, a designated technology, or a designated service, a total number of independent claims in the claim category the same as or related to the specified designated product, the designated technology, or the designated service, and a total number of dependent claims in the claim category the same as or related to the specified designated product, the designated technology, or the designated service, or the plurality of first patent gazettes, the plurality of first published patent applications, or the plurality of first published Japanese translations of a PCT international publication, and collects the at least one first parameter or the second parameter for the plurality of second patent gazettes, the plurality of second published patent applications, or the plurality of second published Japanese translations of a PCT international publication.

By the above-mentioned program, for example, features of a patent that wins in a patent infringement lawsuit or a patent having resistance against an invalidity claim or the like can be investigated in a short time.

In the above-mentioned program, it is preferable to obtain, as a third parameter, a p-value regarding a correlation between the second parameter and the at least one first parameter for the plurality of first patent gazettes, the plurality of first published patent applications, or the plurality of first published Japanese translations of a PCT international publication and the plurality of second patent gazettes, the plurality of second published patent applications, or the plurality of second published Japanese translations of a PCT international publication.

In the above-mentioned program, it is preferable to obtain, as a fourth parameter, a correlation coefficient regarding a correlation between the second parameter and a value of the at least one first parameter for the plurality of first patent gazettes, the plurality of first published patent applications, or the plurality of first published Japanese translations of a PCT international publication and the plurality of second patent gazettes, the plurality of second published patent applications, or the plurality of second published Japanese translations of a PCT international publication.

It is preferable to perform a significant difference test between the plurality of first patent gazettes, the plurality of first published patent applications, or the plurality of first published Japanese translations of a PCT international publication and the plurality of second patent gazettes, the plurality of second published patent applications, or the plurality of second published Japanese translations of a PCT international publication regarding the at least one first parameter or the second parameter.

In the above-mentioned program, it is preferable to further calculate, as a fifth parameter, a ratio between the second parameter and the at least one first parameter for the plurality of first patent gazettes, the plurality of first published patent applications, or the plurality of first published Japanese translations of a PCT international publication and the plurality of second patent gazettes, the plurality of second published patent applications, or the plurality of second published Japanese translations of a PCT international publication, and perform a significant difference test between the plurality of first patent gazettes, the plurality of first published patent applications, or the plurality of first published Japanese translations of a PCT international publication and the plurality of second patent gazettes, the plurality of second published patent applications, or the plurality of second published Japanese translations of a PCT international publication regarding the fifth parameter.

A program according to some aspects of the present invention comprises a first step of collecting, for a plurality of first patent gazettes, a plurality of first published patent applications, or a plurality of first published Japanese translations of a PCT international publication converted into electronic data of a first applicant or a first patentee, a value of a first parameter that is at least one parameter selected from a total number of claims, a total number of independent claims, a total number of dependent claims of a scope of claims of each of them, a maximum number of independent claims within the same claim category, a total number of independent claims in a claim category the same as or related to a specified designated product, a designated technology, or a designated service, a total number of independent claims in the claim category the same as or related to the specified designated product, the designated technology, or the designated service, and a total number of dependent claims in the claim category the same as or related to the specified designated product, the designated technology, or the designated service; and a second step of collecting, for a plurality of second patent gazettes, a plurality of second published patent applications, or a plurality of second published Japanese translations of a PCT international publication converted into electronic data of a second applicant or a second patentee, a value of a second parameter that is at least one parameter selected from a total number of claims, a total number of independent claims, a total number of dependent claims of a scope of claims of each of them, a maximum number of independent claims within the same claim category, a total number of claims in a claim category the same as or related to the specified designated product, the designated technology, or the designated service, a total number of independent claims in the claim category the same as or related to the specified designated product, the designated technology, or the designated service, and a total number of dependent claims in the claim category the same as or related to the specified designated product, the designated technology, or the designated service.

In the above-mentioned program, it is preferable to further include a third step of performing a significant difference test regarding a difference between a value of the first parameter collected in the first step and a value of the second parameter collected in the second step.

In the above-mentioned program, when the first parameter is a total number of claims of the plurality of first patent gazettes, the plurality of first published patent applications, or the plurality of first published Japanese translations of a PCT international publication, the second parameter is a total number of claims of the plurality of second patent gazettes, the plurality of second published patent applications, or the plurality of second published Japanese translations of a PCT international publication; when the first parameter is a total number of claim categories of the plurality of first patent gazettes, the plurality of first published patent applications, or the plurality of first published Japanese translations of a PCT international publication, the second parameter is a total number of claim categories of the plurality of second patent gazettes, the plurality of second published patent applications, or the plurality of second published Japanese translations of a PCT international publication; when the first parameter is a total number of independent claims of the plurality of first patent gazettes, the plurality of first published patent applications, or the plurality of first published Japanese translations of a PCT international publication, the second parameter is a total number of independent claims of the plurality of second patent gazettes, the plurality of second published patent applications, or the plurality of second published Japanese translations of a PCT international publication; when the first parameter is a total number of dependent claims of the plurality of first patent gazettes, the plurality of first published patent applications, or the plurality of first published Japanese translations of a PCT international publication, the second parameter is a total number of dependent claims of the plurality of second patent gazettes, the plurality of second published patent applications, or the plurality of second published Japanese translations of a PCT international publication; when the first parameter is a maximum number of independent claims within the same claim category of the plurality of first patent gazettes, the plurality of first published patent applications, or the plurality of first published Japanese translations of a PCT international publication, the second parameter is a maximum number of independent claims within the same claim category of the plurality of second patent gazettes, the plurality of second published patent applications, or the plurality of second published Japanese translations of a PCT international publication; when the first parameter is a total number of claims in a claim category the same as or related to a specified designated product, a designated technology, or a designated service of the plurality of first patent gazettes, the plurality of first published patent applications, or the plurality of first published Japanese translations of a PCT international publication, the second parameter is a total number of claims in a claim category the same as or related to the specified designated product, the designated technology, or the designated service of the plurality of second patent gazettes, the plurality of second published patent applications, or the plurality of second published Japanese translations of a PCT international publication; and when the first parameter is a total number of dependent claims in a claim category the same as or related to a specified designated product, a designated technology, or a designated service of the plurality of first patent gazettes, the plurality of first published patent applications, or the plurality of first published Japanese translations of a PCT international publication, the second parameter is a total number of dependent claims in a claim category the same as or related to the specified designated product, the designated technology, or the designated service of the plurality of second patent gazettes, the plurality of second published patent applications, or the plurality of second published Japanese translations of a PCT international publication.

A program according to some aspects of the present invention comprises a first step of specifying a first company, a first individual, or a first institution performing sales or manufacture of a designated product or performing a designated service specified by a user, and a market share of the first company, the first individual, or the first institution by using a first database converted into electronic data or an Internet search; a second step of extracting a plurality of first patent gazettes, a plurality of first published patent applications, or a plurality of first published Japanese translations of a PCT international publication that include, in a scope of claims, a claim having a claim category the same as or related to the designated product or the designated service and having the first company, the first individual, or the first institution as a first applicant or a patentee from a second database converted into electronic data or the Internet search; and a third step of collecting, for the plurality of first patent gazettes, the plurality of first published patent applications, or the plurality of first published Japanese translations of a PCT international publication, a value of at least one parameter among a total number of claims, a total number of claim categories, a total number of independent claims, a total number of dependent claims of a scope of claims of each of them, a maximum number of independent claims within the same claim category, a total number of claims in a claim category the same as or related to a designated technology or a designated service, a total number of independent claims in the claim category the same as or related to the specified designated product, the designated technology, or the designated service, and a total number of dependent claims in the claim category the same as or related to the specified designated product, the designated technology, or the designated service.

In the above-mentioned program, it is preferable to further include a fourth step of specifying a market share of a second company, a second individual, or a second institution different from the first company, the first individual, or the first institution performing sales or manufacture of the designated product or performing the designated service by using a third database converted into electronic data or the Internet search; a fifth step of collecting, for a plurality of second patent gazettes or a plurality of second published patent applications, a value of at least one parameter among a total number of claims, a total number of claim categories, a total number of independent claims, a total number of dependent claims of a scope of claims of each of the plurality of second patent gazettes, the plurality of second published patent applications, or the published Japanese translations of a PCT international publication extracted based on the fourth step, a maximum number of independent claims within the same claim category, a total number of claims in a claim category the same as or related to the designated technology or the designated service, a total number of independent claims in the claim category the same as or related to the specified designated product, the designated technology, or the designated service, and a total number of dependent claims in the claim category the same as or related to the specified designated product, the designated technology, or the designated service; and a sixth step of performing a significant difference test regarding a difference between a value of the at least one parameter collected in the third step and a value of the at least one parameter collected in the fifth step.

A program according to some aspects of the present invention collects, from a scope of claims of each of a plurality of patent gazettes, a plurality of published patent applications, or a plurality of published Japanese translations of a PCT international publication converted into electronic data, at least one of a total number of limiting elements that is a number of limiting elements of a claim and a total number of specified terms that is a number of specified terms used for specifying an already-appeared limiting element of the claim and describing a relationship with another limiting element.

In claim preparation, for example, when describing a relationship between limiting elements, a specified term is attached before an already-appeared limiting element to describe a relationship with a new limiting element; therefore, a total number of limiting elements and a total number of specified terms can serve as basic indices of understanding of an invention or accuracy of practice, and thus by using the above-mentioned program, for example, it becomes possible to easily obtain basic indices for understanding of an invention or accuracy of practice.

In the above-mentioned program, it is preferable to collect both the total number of limiting elements and the total number of specified terms.

In the above-mentioned program, it is preferable that collection of at least one of the total number of limiting elements and the total number of specified terms is implemented for an independent claim of the scope of claims.

A program according to some aspects of the present invention comprises a first step of collecting, for a plurality of first patent gazettes, a plurality of first published patent applications, or a plurality of first published Japanese translations of a PCT international publication converted into electronic data of a first applicant or a first patentee, at least one parameter among a total number of limiting elements that is a number of limiting elements of a claim of a scope of claims of each of them and a total number of specified terms that is a number of specified terms used for specifying an already-appeared limiting element of the claim and describing a relationship with another limiting element; a second step of collecting, for a plurality of second patent gazettes, a plurality of second published patent applications, or a plurality of second published Japanese translations of a PCT international publication converted into electronic data of a second applicant or a second patentee, from a scope of claims of each of them, at least one parameter among a total number of limiting elements that is a number of limiting elements of a claim and a total number of specified terms that is a number of specified terms used for specifying an already-appeared limiting element of the claim and describing a relationship with another limiting element; and a third step of performing a significant difference test between a value of the at least one parameter collected in the first step and a value of the at least one parameter collected in the second step.

In the above-mentioned program, it is preferable to collect both the total number of limiting elements and the total number of specified terms in the first step, and collect both the total number of limiting elements and the total number of specified terms in the second step.

In the above-mentioned program, it is preferable to include a fourth step of performing a significant difference test between a ratio of the number of limiting elements to the number of specified terms collected in the first step and a ratio of the number of limiting elements to the number of specified terms collected in the second step.

A program according to some aspects of the present invention comprises a specifying step of specifying a company or the like that specifies a company, an individual, or an institution having a possibility of selling or transferring at least a part of a business to another company, individual, or institution, or a company, an individual, or an institution having a possibility of acquiring or receiving at least a part of a business from another company, individual, or institution, or a company having a possibility of becoming a target for investment, financing, stock trading, or bond trading; a patent-gazette-or-like extraction step of extracting a plurality of patent gazettes, a plurality of published patent applications, or a plurality of published Japanese translations of a PCT international publication including a scope of claims each containing a claim category the same as or related to a designated product, a designated technology, or a designated service that is a product, a technology, or a service related to at least the part of the business; and a first parameter collection step of implementing a first collection step of collecting, for the plurality of patent gazettes, the plurality of published patent applications, or the plurality of published Japanese translations of a PCT international publication, at least one first parameter among a plurality of first parameters consisting of a total number of claims, a total number of claim categories, a total number of independent claims, a total number of dependent claims, a maximum number of independent claims within the same claim category, a total number of claims in a claim category the same as or related to a designated technology or a designated service, a total number of independent claims in the claim category the same as or related to a specified designated product, the designated technology, or the designated service, and a total number of dependent claims in the claim category the same as or related to the specified designated product, the designated technology, or the designated service.

By the above-mentioned program, for example, it becomes possible to easily obtain basic parameters that enable evaluation of a company's patent from multiple viewpoints such as competitiveness, robustness, accuracy of practice, and understanding of technology.

In the above-mentioned program, it is preferable to further include a second parameter collection step of collecting, as a second parameter, a number of cited documents that is a number of prior art documents cited in examination at a patent office for a plurality of patent applications corresponding to the plurality of patent gazettes, the plurality of published patent applications, or the plurality of published Japanese translations of a PCT international publication, for the plurality of patent gazettes, the plurality of published patent applications, or the plurality of published Japanese translations of a PCT international publication.

In the above-mentioned program, it is preferable to further include a first calculation step of calculating, as a third parameter, a p-value regarding a correlation between the second parameter and a value of the at least one first parameter.

In the above-mentioned program, it is preferable to include a second calculation step of calculating a correlation coefficient as a fourth parameter regarding a correlation between the second parameter and a value of the at least one first parameter.

In the above-mentioned program, it is preferable to further implement a third calculation step of calculating a ratio between the second parameter and the at least one first parameter as a fifth parameter.

In the above-mentioned program, it is preferable to further include a first evaluation step of evaluating the company, the individual, or the institution specified by the specifying step of specifying a company or the like using the at least one first parameter as an evaluation criterion.

In the above-mentioned program, it is preferable to further include a first evaluation step of evaluating the company, the individual, or the institution specified by the specifying step of specifying a company or the like using the second parameter as an evaluation criterion.

In the above-mentioned program, it is preferable to further include a first evaluation step of evaluating the company, the individual, or the institution specified by the specifying step of specifying a company or the like using the third parameter as an evaluation criterion.

In the above-mentioned program, it is preferable to further include a first evaluation step of evaluating the company, the individual, or the institution specified by the specifying step of specifying a company or the like using the fourth parameter as an evaluation criterion.

In the above-mentioned program, it is preferable to further include a first evaluation step of evaluating the company, the individual, or the institution specified by the specifying step of specifying a company or the like using the fifth parameter as an evaluation criterion.

In the above-mentioned program, it is preferable that the first evaluation step includes a comparison with a result obtained by a second evaluation step performed on a benchmark company, individual, or institution.

A program according to some aspects of the present invention comprises a specifying step of specifying a company or the like that specifies a company, an individual, or an institution having a possibility of selling or transferring at least a part of a business to another company, individual, or institution, or a company, an individual, or an institution having a possibility of acquiring or receiving at least a part of a business from another company, individual, or institution, or a company having a possibility of becoming a target for investment, financing, stock trading, or bond trading; a patent-gazette-or-like extraction step of extracting a plurality of patent gazettes, a plurality of published patent applications, or a plurality of published Japanese translations of a PCT international publication including a scope of claims each containing a claim category the same as or related to a designated product, a designated technology, or a designated service that is a product, a technology, or a service related to at least the part of the business; and a collection step of collecting, from a scope of claims of each of the plurality of patent gazettes, the plurality of published patent applications, or the plurality of published Japanese translations of a PCT international publication, at least one of a total number of limiting elements that is a number of limiting elements of a claim and a total number of specified terms that is a number of specified terms used for specifying an already-appeared limiting element of the claim and describing a relationship with another limiting element.

In the above-mentioned program, it is preferable that in the collection step, the total number of limiting elements and the total number of specified terms are implemented for a claim of the claim category.

In the above-mentioned program, it is preferable to collect both the total number of limiting elements and the total number of specified terms.

In the above-mentioned program, it is preferable that collection of at least one of the total number of limiting elements and the total number of specified terms is implemented for an independent claim of the scope of claims.

In the above-mentioned program, it is preferable to further include a calculation step of calculating a ratio of the total number of limiting elements to the total number of specified terms.

In the above-mentioned program, it is preferable to further include a test step of performing a significant difference test between at least one of the number of limiting elements and the number of specified terms for a benchmark company, individual, or institution and at least one of the number of limiting elements and the number of specified terms obtained by the collection step for the company, the individual, or the institution specified in the specifying step of specifying a company or the like.

In the above-mentioned program, it is preferable to further include a test step of performing a significant difference test between the ratio for a benchmark company, individual, or institution and the ratio obtained by the calculation step for the company, the individual, or the institution specified in the specifying step of specifying a company or the like.

A program according to some aspects of the present invention specifies an existence or a number of a description based on an experimental result regarding at least one of a scope of claims, an embodiment, and an example for each of a plurality of patent gazettes, a plurality of published patent applications, or a plurality of published Japanese translations of a PCT international publication converted into electronic data.

A program according to some aspects of the present invention specifies an existence or a number of a description of a numerical value regarding at least one of a scope of claims, an embodiment, and an example for each of a plurality of patent gazettes, a plurality of published patent applications, or a plurality of published Japanese translations of a PCT international publication converted into electronic data.

A program according to some aspects of the present invention specifies an existence or a number of a description of a numerical value based on an experimental result regarding at least one of a scope of claims, an embodiment, and an example for each of a plurality of patent gazettes, a plurality of published patent applications, or a plurality of published Japanese translations of a PCT international publication converted into electronic data.

By using the above-mentioned program, for example, it is possible to grasp a patent or a patent application that is an invention based on discovery and has high basic inventiveness.

For an invention based on an embodiment or an example based on a qualitative description without numerical description, for example, a larger number of specified terms per limiting element leads to higher competitiveness or a higher winning rate in a patent lawsuit.

A program according to some aspects of the present invention comprises a first step of collecting, for a plurality of patent gazettes, a plurality of published patent applications, or a plurality of published Japanese translations of a PCT international publication converted into electronic data, at least one first parameter among a plurality of first parameters consisting of a total number of claims, a total number of claim categories, a total number of independent claims, a total number of dependent claims, a maximum number of independent claims within the same claim category regarding a scope of claims of each of them, a total number of claims in a claim category the same as or related to a specified designated product, a designated technology, or a designated service, a total number of independent claims in the claim category the same as or related to the specified designated product, the designated technology, or the designated service, and a total number of dependent claims in the claim category the same as or related to the specified designated product, the designated technology, or the designated service; a second step of collecting, as a second parameter, a number of cited documents that is a number of prior art documents cited in examination at a patent office for a plurality of patent applications corresponding to the plurality of patent gazettes, the plurality of published patent applications, or the plurality of published Japanese translations of a PCT international publication; a third step of collecting, from a scope of claims of each of the plurality of patent gazettes, the plurality of published patent applications, or the plurality of published Japanese translations of a PCT international publication, at least one of a total number of limiting elements that is a number of limiting elements of a claim and a total number of specified terms that is a number of specified terms used for specifying an already-appeared limiting element of the claim and describing a relationship with another limiting element; and a fourth step of specifying an existence or a number of a description based on an experimental result or a description of a numerical value in a scope of claims, an embodiment, or an example for each of the plurality of patent gazettes, the plurality of published patent applications, or the plurality of published Japanese translations of a PCT international publication.

In the above-mentioned program, it is preferable to further include a fifth step of extracting the plurality of patent gazettes, the plurality of published patent applications, or the plurality of published Japanese translations of a PCT international publication so as to include a plurality of first patent gazettes, a plurality of first published patent applications, or a plurality of first published Japanese translations of a PCT international publication having a first applicant or a first patentee as an applicant or a patentee, and a plurality of second patent gazettes, a plurality of second published patent applications, or a plurality of second published Japanese translations of a PCT international publication having a second applicant or a second patentee as an applicant or a patentee; and a sixth step of comparing a result obtained in at least one of the first step, the second step, the third step, and the fourth step, or an evaluation based on the result, between the plurality of first patent gazettes, the plurality of first published patent applications, or the plurality of first published Japanese translations of a PCT international publication and the plurality of second patent gazettes, the plurality of second published patent applications, or the plurality of second published Japanese translations of a PCT international publication.

In the above-mentioned program, it is preferable to further include a seventh step of performing scoring of a result obtained in at least one of the first step, the second step, the third step, and the fourth step, or scoring of an evaluation based on the result.

In the above-mentioned program, it is preferable that in the seventh step, the scoring is performed using a deviation score.

In the above-mentioned program, it is preferable to further include an eighth step of implementing at least one of the first step, the second step, the third step, and the fourth step for each patent gazette, published patent application, or published Japanese translations of a PCT international publication containing a claim category the same as or related to an applicant or a patentee or a designated product, a designated technology, or a designated service of the plurality of patent gazettes, the plurality of published patent applications, or the plurality of published Japanese translations of a PCT international publication, and obtaining a deviation score for each of the applicant or the patentee or for each of the designated product, the designated technology, or the designated service.

In the above-mentioned program, it is preferable to further include a ninth step of visualizing a result of the seventh step.

A device according to some aspects of the present invention is equipped with the program described above or below.

The above-mentioned device can be used as, for example, a device for presenting a company to be a target of investment, financing, stock trading, or bond trading, or an M&A plan, a device for searching for an M&A target company, or the like.

A program according to some aspects of the present invention collects, from a scope of claims of each of a plurality of patent gazettes, a plurality of published patent applications, or a plurality of published Japanese translations of a PCT international publication converted into electronic data, at least one of a total number of limiting elements that is a number of limiting elements of a claim and a total number of specified terms that is a number of specified terms used for specifying an already-appeared limiting element of the claim and describing a relationship with another limiting element, and evaluates the total number of limiting elements for each predetermined range.

In the above-mentioned program, it is preferable to collect both the number of limiting elements and the number of specified terms.

In the above-mentioned program, it is preferable that collection of at least one of the number of limiting elements and the number of specified terms is implemented for an independent claim of the scope of claims.

A program according to some aspects of the present invention comprises a first step of collecting, for a plurality of first patent gazettes, a plurality of first published patent applications, or a plurality of first published Japanese translations of a PCT international publication converted into electronic data of a first applicant or a first patentee, at least one parameter among a total number of limiting elements that is a number of limiting elements of a claim of a scope of claims of each of them and a total number of specified terms that is a number of specified terms used for specifying an already-appeared limiting element of the claim and describing a relationship with another limiting element; a second step of collecting, for a plurality of second patent gazettes, a plurality of second published patent applications, or a plurality of second published Japanese translations of a PCT international publication converted into electronic data of a second applicant or a second patentee, from a scope of claims of each of them, at least one parameter among a total number of limiting elements that is a number of limiting elements of a claim and a total number of specified terms that is a number of specified terms used for specifying an already-appeared limiting element of the claim and describing a relationship with another limiting element; and a third step of performing a significant difference test between a value of the at least one parameter collected in the first step and a value of the at least one parameter collected in the second step.

In the above-mentioned program, it is preferable to collect both the total number of limiting elements and the total number of specified terms in the first step, and collect both the total number of limiting elements and the total number of specified terms in the second step.

In the above-mentioned program, a comparison may be made between the first applicant or the first patentee and the second applicant or the second patentee by dividing into a plurality of ranges according to the total number of limiting elements.

In the above-mentioned program, it is preferable to include a fourth step of performing a significant difference test between a ratio of the number of limiting elements to the number of specified terms collected in the first step and a ratio of the number of limiting elements to the number of specified terms collected in the second step.

A program according to some aspects of the present invention comprises a specifying step of specifying a company or the like that specifies a company, an individual, or an institution having a possibility of selling or transferring at least a part of a business to another company, individual, or institution, or a company, an individual, or an institution having a possibility of acquiring or receiving at least a part of a business from another company, individual, or institution; a patent-gazette-or-like extraction step of extracting a plurality of patent gazettes, a plurality of published patent applications, or a plurality of published Japanese translations of a PCT international publication including a scope of claims each containing a claim category the same as or related to a designated product, a designated technology, or a designated service that is a product, a technology, or a service related to at least the part of the business; and a first parameter collection step of implementing a first collection step of collecting, for the plurality of patent gazettes, the plurality of published patent applications, or the plurality of published Japanese translations of a PCT international publication, at least one first parameter among a plurality of first parameters consisting of a total number of claims, a total number of claim categories, a total number of independent claims, a total number of dependent claims, a maximum number of independent claims within the same claim category, a total number of claims in the claim category, a total number of independent claims in the claim category, and a number of dependent claims in the claim category.

In the above-mentioned program, it is preferable to further include a second parameter collection step of collecting, as a second parameter, a number of cited documents that is a number of prior art documents cited in examination at a patent office for a plurality of patent applications corresponding to the plurality of patent gazettes, the plurality of published patent applications, or the plurality of published Japanese translations of a PCT international publication, for the plurality of patent gazettes, the plurality of published patent applications, or the plurality of published Japanese translations of a PCT international publication.

In the above-mentioned program, it is preferable to further include a first calculation step of calculating, as a third parameter, a p-value regarding a correlation between the second parameter and a value of the at least one first parameter.

In the above-mentioned program, it is preferable to include a second calculation step of calculating a correlation coefficient as a fourth parameter regarding a correlation between the second parameter and a value of the at least one first parameter.

In the above-mentioned program, it is preferable to further implement a third calculation step of calculating a ratio between the second parameter and the at least one first parameter as a fifth parameter.

In the above-mentioned program, it is preferable to further include a first evaluation step of evaluating the company, the individual, or the institution specified by the specifying step of specifying a company or the like using at least one of the at least one first parameter, the second parameter, the third parameter, and the fifth parameter as an evaluation criterion.

In the above-mentioned program, it is preferable that the first evaluation step includes a comparison with a result obtained by a second evaluation step performed on a benchmark company, individual, or institution.

A program according to some aspects of the present invention comprises a specifying step of specifying a company or the like that specifies a company, an individual, or an institution having a possibility of selling or transferring at least a part of a business to another company, individual, or institution, or a company, an individual, or an institution having a possibility of acquiring or receiving at least a part of a business from another company, individual, or institution, or a company to be a target of investment, financing, stock trading, or bond trading; a patent-gazette-or-like extraction step of extracting a plurality of patent gazettes, a plurality of published patent applications, or a plurality of published Japanese translations of a PCT international publication including a scope of claims each containing a claim category the same as or related to a designated product, a designated technology, or a designated service that is a product, a technology, or a service related to at least the part of the business; and a collection step of collecting, from a scope of claims of each of the plurality of patent gazettes, the plurality of published patent applications, or the plurality of published Japanese translations of a PCT international publication, at least one of a number of limiting elements that is a number of limiting elements of a claim and a number of specified terms that is a number of specified terms used for specifying an already-appeared limiting element of the claim and describing a relationship with another limiting element.

In the above-mentioned program, it is preferable that in the collection step, the number of limiting elements and the number of specified terms are implemented for a claim of the claim category.

In the above-mentioned program, it is preferable to collect both the number of limiting elements and the number of specified terms.

In the above-mentioned program, it is preferable that collection of at least one of the number of limiting elements and the number of specified terms is implemented for an independent claim of the scope of claims.

In the above-mentioned program, it is preferable to further include a calculation step of calculating a ratio of the number of limiting elements to the number of specified terms.

In the above-mentioned program, it is preferable to further include a test step of performing a significant difference test between at least one of the number of limiting elements and the number of specified terms for a benchmark company, individual, or institution and at least one of the number of limiting elements and the number of specified terms obtained by the collection step for the company, the individual, or the institution specified in the specifying step of specifying a company or the like.

In the above-mentioned program, it is preferable to further include a test step of performing a significant difference test between the ratio for a benchmark company, individual, or institution and the ratio obtained by the calculation step for the company, the individual, or the institution specified in the specifying step of specifying a company or the like.

A method for evaluating intellectual property, a method for determining competitiveness of intellectual property, a method for determining a company to be a target of investment, financing, stock trading, bond trading, or M&A, and the like according to some aspects of the present invention use at least any one of the programs described above.

A program according to some aspects of the present invention, such as a method for evaluating intellectual property, a method for determining competitiveness of intellectual property, a method for determining a company to be a target of investment, financing, stock trading, bond trading, or M&A, and the like, includes at least any one of the programs described above.

A program according to some aspects of the present invention includes any one of the programs described above, and further includes a function of collecting company information. The above-mentioned company information is typically, for example, sales, net income, ordinary income, corporate value, business value, stock value, free cash flow, dividend amount per share, payout ratio, dividend yield, growth rate, price-to-earnings ratio, price-to-book ratio, return on equity, ordinary income, market capitalization, weighted average cost of capital, return on shareholder equity, cost of shareholder equity, earnings per share, and net income per share, and two or more of these pieces of company information may be acquired.

The above-mentioned program can be used, for example, for a selection of a company that is a target of investment, financing, stock trading, bond trading, or M&A.

A program according to some aspects of the present invention comprises a parameter collection step of collecting at least one parameter from each of a plurality of patent gazettes, a plurality of published patent applications, or a plurality of published Japanese translations of a PCT international publication converted into electronic data, and a company information collection step of collecting company information of at least a part of companies described as an applicant in the plurality of patent gazettes, the plurality of published patent applications, or the plurality of published Japanese translations of a PCT international publication. Typical examples of the above-mentioned company information are as described above.

In the above-mentioned program, it is preferable to further include a parameter analysis step of performing analysis of the at least one parameter collected by the parameter collection step, and a company output step of outputting a company described as an applicant in a patent gazette, a published patent application, or a published Japanese translations of a PCT international publication that has obtained an evaluation of at least a predetermined value or more in at least one evaluation item by the parameter analysis step. Note that an application period of a patent or a patent application to be a target of parameter collection, which is a base for calculation of an evaluation item, can be appropriately set for each evaluation item. For example, regarding basic inventiveness (B), since it is assumed that there is a time lag until commercialization, it may be better to use a parameter collected from an application of an older period compared with, for example, robustness (R) which becomes important after a transition from a market growth period to a stable period. For example, since coverage (C) is an important evaluation item in a market growth period after establishment of a dominant design of a product or a service, it may be better to use a parameter collected from an application of an older period compared with the above-mentioned robustness (R).

The above-mentioned at least one parameter is typically, for example, a total number of claims, a total number of claim categories, a total number of independent claims, a total number of dependent claims, a maximum number of independent claims within the same claim category, a total number of claims in the claim category, a total number of independent claims in the claim category, and a number of dependent claims in the claim category, a number of a prior art document or a cited document, the above-mentioned number of limiting elements and number of specified terms, and further, a result of a correlation analysis such as a correlation coefficient between a plurality of parameters among these can be mentioned.

In the above-mentioned program, it is preferable to further include a selection step of selecting a company output by the company output step as a target company for financing, investment, stock trading, bond trading, or M&A.

In the above-mentioned program, since it is possible to quantify or compare competitiveness of a patent, robustness, accuracy in patent practice, understanding of technology, and the like in which corporate competitiveness, stability, and the like are strongly reflected, it is possible to ensure objectivity when selecting a target company for financing, investment, stock trading, bond trading, or M&A.

In the above-mentioned program, it is preferable to further include a company evaluation step of performing company evaluation based on company information obtained by the company information collection step, and a company extraction step of extracting a company having a predetermined value or more in at least one evaluation item as a criterion by the company evaluation step, wherein the parameter collection step is performed for a company extracted by the company extraction step.

In the above-mentioned program, it is preferable to further include a parameter analysis step of performing analysis of the at least one parameter collected by the parameter collection step, and a company output step of outputting a company having a predetermined value or more in at least one evaluation item by the parameter analysis step.

A program according to some aspects of the present invention comprises a parameter collection step of collecting a plurality of parameters from a plurality of patent gazettes, a plurality of published patent applications, or a plurality of published Japanese translations of a PCT international publication converted into electronic data; a company information collection step of collecting company information of at least a part of companies described as an applicant in the plurality of patent gazettes, the plurality of published patent applications, or the plurality of published Japanese translations of a PCT international publication; a data analysis step of analyzing the plurality of parameters collected by the parameter collection step and implementing evaluation of a plurality of evaluation items regarding the plurality of patent gazettes, the plurality of published patent applications, or the plurality of published Japanese translations of a PCT international publication; and a company selection step of selecting at least one company regarding each of the plurality of evaluation items or regarding two or more evaluation items.

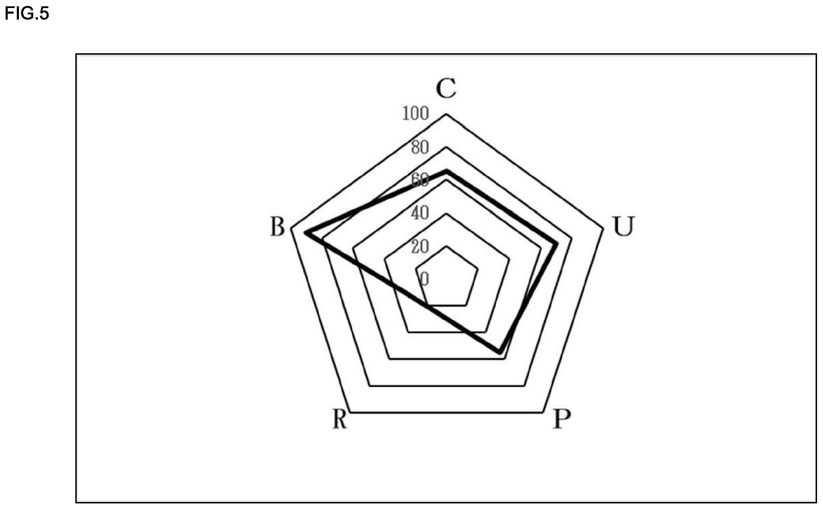

The above-mentioned evaluation items are typically, for example, evaluation of coverage (C), technical understanding (U), practical accuracy (P), robustness (R), and basic inventiveness (B) (CUPRB evaluation) as shown in FIG. 5 described later.

In the above-mentioned program, it is preferable that a company selected by the company selection step is a company that has obtained a score of a predetermined value or more in each evaluation item in the data analysis step.

For example, when performing stock trading, it may be necessary to consider a balance between investment risk and return, etc.; among the above-mentioned evaluation items, for example, when importance is placed on growth potential, a larger number of companies with a high rank in coverage (C) can be included as a target of investment, financing, stock trading, bond trading, or M&A, and when importance is placed on stability rather than risk, a larger number of companies with a high rank in robustness (R) can be included as a target of investment, financing, stock trading, bond trading, or M&A. Also, when performing long-term investment, financing, stock trading, bond trading, or M&A, for example, evaluation of basic inventiveness (B) may be emphasized. When importance is placed on a practical ability of intellectual property, for example, evaluation of practical accuracy (P) may be emphasized, and when importance is placed on a high technical level, evaluation of technical understanding (U) may be emphasized.

Among the plurality of evaluation items described above, for example, ranks of companies may be determined for two or more evaluation items. In this case, when selecting a target company for financing, investment, stock trading, bond trading, or the like by placing importance on, for example, a growth period for an application period of a patent or a patent application to be a target of parameter collection which is a base for calculation of an evaluation item, a company may be selected after evaluating coverage (C) and basic inventiveness (B) at a predetermined ratio. In this case, according to an evaluation item, since basic inventiveness (B) requires a period to be reflected in a business, it may be better to use a parameter collected from an application of an older period compared with robustness (R) which becomes important after transition to a stable period. Since coverage (C) is an important evaluation item in a market growth period after establishment of a dominant design of a product or a service, it may be better to use a parameter collected from an application of an older period compared with the above-mentioned robustness (R).

A device according to the present invention is equipped with any one of the programs described above.

Any of the programs described above may be at least partially performed by a user themselves, and can be, for example, a patent evaluation method, a method for selecting a target company for investment, financing, stock trading, bond trading, or M&A, or a due diligence method.

According to some aspects of the present invention, for example, effective evaluation of competitiveness, robustness, accuracy of intellectual property practice, basic inventiveness, understanding of technology, and the like becomes possible for many patent applications and patents, and it can be used for a selection of a target company for investment, financing, stock trading, bond trading, or M&A, and a due diligence method.

### Brief Description of Drawings

FIG. 1 is a diagram for explaining a program according to an embodiment of some aspects of the present invention.
FIG. 2 is a diagram for explaining a program according to an embodiment of some aspects of the present invention.
FIG. 3 is a diagram for explaining a program according to an embodiment of some aspects of the present invention.
FIG. 4 is a diagram for explaining a program according to an embodiment of some aspects of the present invention.
FIG. 5 is a diagram for explaining a program according to an embodiment of some aspects of the present invention.
FIG. 6 is a diagram for explaining a program according to an embodiment of some aspects of the present invention.
FIG. 7 is a diagram for explaining a program according to an embodiment of some aspects of the present invention.
FIG. 8 is a diagram for explaining a program according to an embodiment of some aspects of the present invention.
FIG. 9 is a diagram for explaining a program according to an embodiment of some aspects of the present invention.
FIG. 10 is a diagram for explaining a program according to an embodiment of some aspects of the present invention.
FIG. 11 is a diagram for explaining a program according to an embodiment of some aspects of the present invention.
FIG. 12 is a diagram for explaining a program according to an embodiment of some aspects of the present invention.
FIG. 13 is a device diagram according to an embodiment of some aspects of the present invention.

### Description of Embodiments

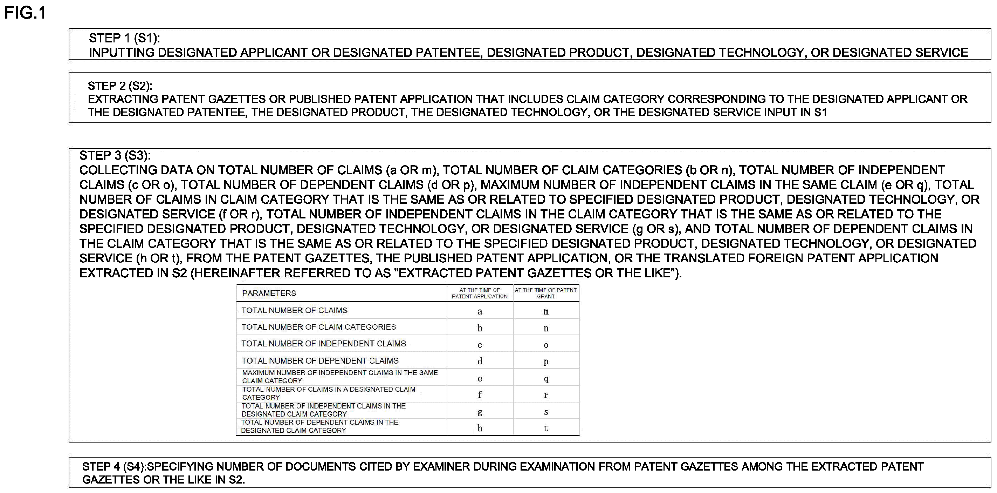

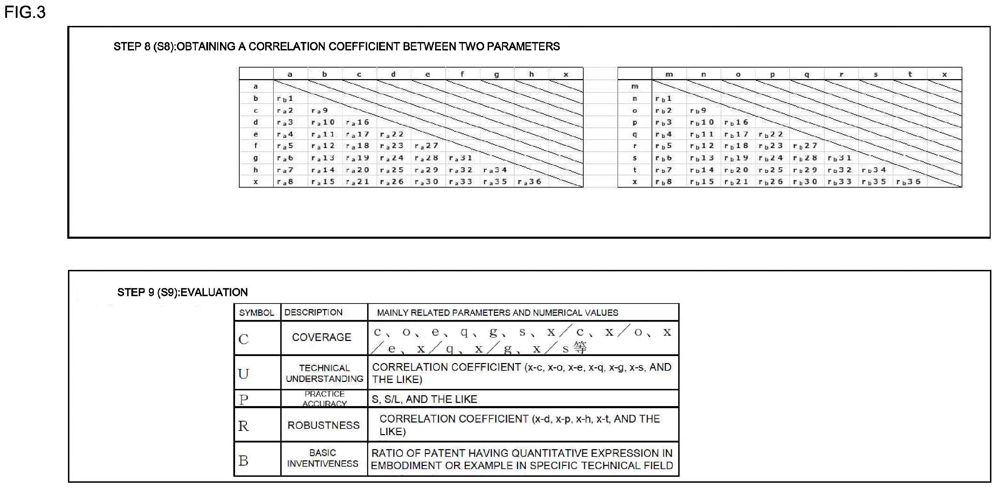

Embodiments according to some aspects of the present invention will be described below with reference to FIGS. 1 to 13. Note that the drawings explain specific examples of the some aspects, and a scope of the present invention and a concept thereof is not limited to the embodiments. FIG. 1 shows steps 1 to 4 of a program according to some aspects of the present invention. The program inputs a specified applicant or a specified right holder, a designated product, a designated technology, or a designated service as step 1 (S1). As step 2 (S2), the program extracts a patent gazette, a published patent application, or a published Japanese translations of a PCT international publication that includes the designated product, the designated technology, or the designated service input in S1 in a claim category. Note that the designated service to be input may include, for example, a service, a business model, and a business. Also, the patent gazette, the published patent application, or the published Japanese translations of a PCT international publication extracted in S2 is hereinafter collectively referred to as an extracted patent gazette or the like.

As step 3 (S3), the program collects data from the extracted patent gazette or the like in S2, the data including: a total number of claims (a or m), a total number of claim categories (b or n), a total number of independent claims (c or o), a total number of dependent claims (d or p), a maximum number of independent claims within a same claim category (e or q), a total number of claims in a claim category same as or related to a specified designated product, a designated technology, or a designated service (f or r), a total number of independent claims in the claim category same as or related to the specified designated product, the designated technology, or the designated service (g or s), and a total number of dependent claims in the claim category same as or related to the specified designated product, the designated technology, or the designated service (h or t).

Note that Table 1 shows typical parameters regarding claims obtained in S3. A parameter at a time of a patent application or an application publication is, for example, a total number of claims (a), a total number of claim categories (b), a total number of independent claims (c), a total number of dependent claims (d), a maximum number of independent claims within one claim category (e), a total number of claims within a specified claim category (f), a total number of all independent claims within the specified claim category (g), and a total number of all dependent claims within the specified claim category (h). A parameter at a time of a patent allowance is, for example, a total number of claims (m), a total number of claim categories (n), a total number of independent claims (o), a total number of dependent claims (p), a maximum number of independent claims within one claim category (q), a total number of claims within the specified claim category (r), a total number of all independent claims within the specified claim category (s), and a total number of all dependent claims within the specified claim category (t).

**[Table 1]**

| PARAMETERS | AT THE TIME OF PATENT APPLICATION | AT THE TIME OF PATENT GRANT |
|---|---|---|
| TOTAL NUMBER OF CLAIMS | a | m |
| TOTAL NUMBER OF CLAIM CATEGORIES | b | n |
| TOTAL NUMBER OF INDEPENDENT CLAIMS | c | o |
| TOTAL NUMBER OF DEPENDENT CLAIMS | d | p |
| MAXIMUM NUMBER OF INDEPENDENT CLAIMS IN THE SAME CLAIM CATEGORY | e | q |
| TOTAL NUMBER OF CLAIMS IN A DESIGNATED CLAIM CATEGORY | f | r |
| TOTAL NUMBER OF INDEPENDENT CLAIMS IN THE DESIGNATED CLAIM CATEGORY | g | s |
| TOTAL NUMBER OF DEPENDENT CLAIMS IN THE DESIGNATED CLAIM CATEGORY | h | t |

As step 4 (S4), the program specifies several documents cited in examination by an examiner from a patent gazette among the extracted patent gazette or the like extracted in S2.

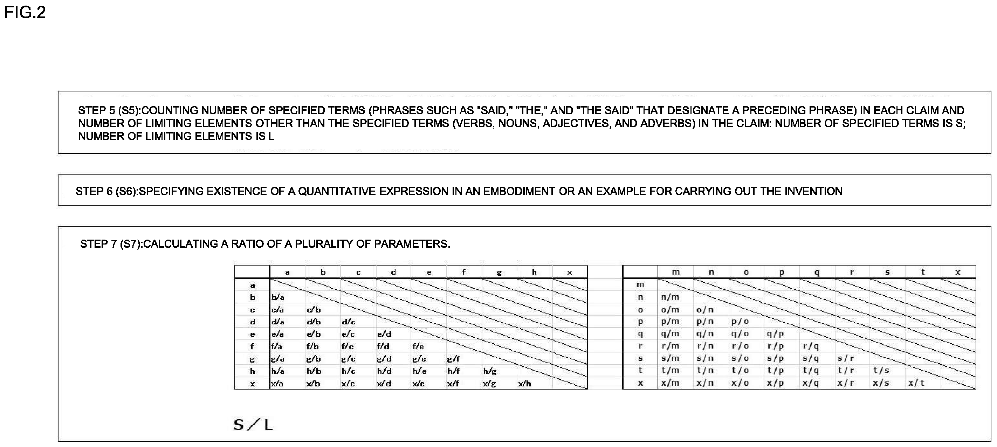

FIG. 2 shows step 5 to step 7 of the program. In step 5 (S5), the program counts the number of specified terms (such as "the", "said", "this", or similar terms referring back to a preceding element) in each claim, and counts the number of limiting elements (verbs, nouns, adjectives, and adverbs) other than the specified terms in the claim. It is preferable that the limiting element is basically a content word.

Typical examples of the limiting element and the specified phrase will be described below.

"(Claim 1) An 'apparatus' characterized by comprising: a first 'unit' 'detecting' an 'effective' 'value' of a 'current' 'supplied' to an 'electric' 'machine'; a second 'unit' 'storing' a 'current' 'value' of a 'coil' 'current' of [the] 'electric' 'machine' 'corresponding' to a 'maximum' 'torque' of [the] 'electric' 'machine'; a third 'unit' 'calculating' a 'ratio' between [the] 'effective' 'value' and the 'current' 'value', and 'outputting' 'data' 'corresponding' to [the] 'ratio'; and a fourth 'unit' 'controlling' a 'voltage' 'applied' to [the] 'electric' 'machine' 'based' on [the] 'data'."

In the above example, the limiting element and the total number of specified terms are represented by """ and "[]", respectively.

In a program according to the embodiment, focus is also placed on a predicate such as a verb, and a modifying term such as an adjective or an adverb. This reflects that. An outer boundary of a patented invention is determined based on the All Element Rule. Specifically, if an alleged infringing product satisfies all of the elements (limiting elements) described in a claim that serve as limitations in claim interpretation, it is determined as a patent infringement in principle.

For example, since modifying terms such as "electric" in "electric machine" and "corresponding" in "data corresponding to a ratio" respectively limit "machine" and "data", terms such as "electric" and "corresponding" that modify and limit these other limiting elements were also counted as limiting elements. Note that "first" and "second" in "a first unit" and "a second unit" are terms used for convenience of claim description and do not substantially impart a limitation to a scope of rights; therefore, they are not counted as a limiting element in the program according to the embodiment. Accordingly, the total number of limiting elements L of claim 1 in the above example is 41.

Analysis of claim description was performed using a specified term in addition to the above-mentioned limiting element. The specified term is "the" in "the effective value" or "the ratio" in the above example, and in this case, it specifies "effective value" or "ratio" which is an already-appeared limiting element in the claim. The total number of specified terms S of claim 1 in the above example is 6. In the program according to the embodiment, terms such as "said," "the said," "the above," and "this" are also used as a specified term in addition to this "the." The total number of specified terms (S) basically corresponds to a description of a relationship between limiting elements in a claim.

As step 6 (S6), the program confirms the existence or a number quantitative expressions in an embodiment or an example for carrying out an invention in the extracted patent gazette or the like. As the quantitative expression, for example, there is an example in which a result such as an experimental result is described based on actual numerical data. For example, it may be obtained as a ratio of a patent application or a patent having a quantitative expression in an embodiment or an example for each specified applicant or right holder, or each specified technology or product.

As step 7 (S7), the program calculates a ratio of two parameters from the parameters obtained in S3 and S4 as shown in Tables 2 and 3 below. Table 2 is based on a parameter extracted from a scope of claims at a time of a patent application or an application publication, and Table 3 is based on a parameter extracted from a scope of claims at a time of a patent allowance or a patent registration.

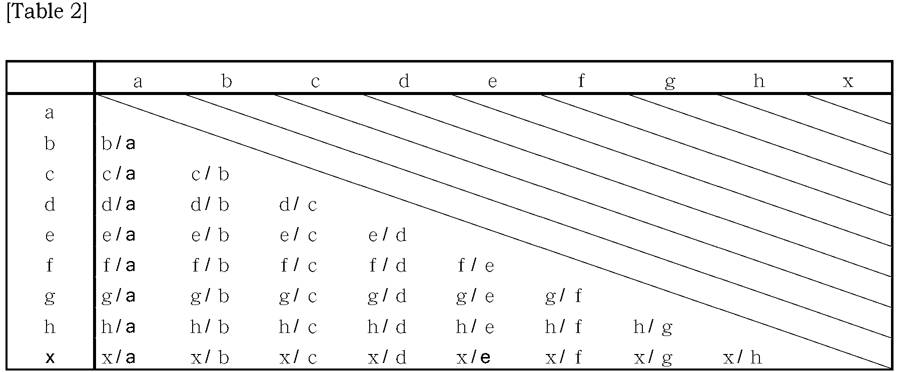

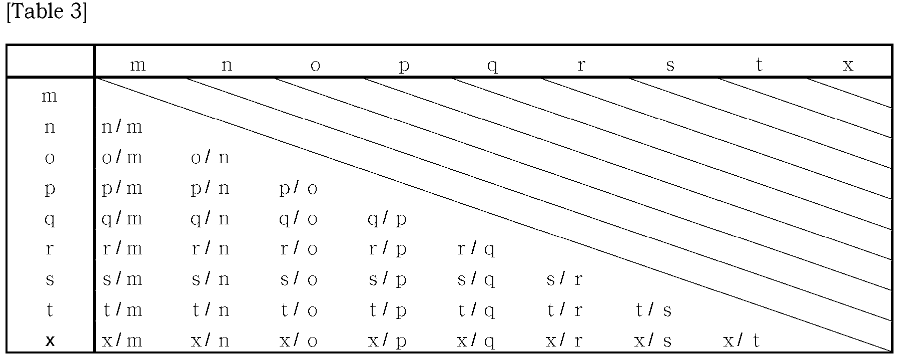

In Table 2, the ratio of the parameters extracted from the scope of claims at the time of the patent application or the application publication specifically includes, in the embodiment, b/a, c/a, d/a, e/a, f/a, g/a, h/a, x/a, c/b, d/b, e/b, f/b, g/b, h/b, x/b, d/c, e/c, f/c, g/c, h/c, x/c, e/d, f/d, g/d, h/d, x/d, f/e, g/e, h/e, x/e, g/f, h/f, x/f, h/g, x/g, and x/h.

In Table 3, the ratio of the parameters extracted from the scope of claims at the time of the patent allowance specifically includes, in the embodiment, n/m, o/m, p/m, q/m, r/m, s/m, t/m, x/m, o/n, p/n, q/n, r/n, s/n, t/n, x/n, p/o, q/o, r/o, s/o, t/o, x/o, q/p, r/p, s/p, t/p, x/p, r/q, s/q, t/q, x/q, s/r, t/r, x/r, t/s, x/s, and x/t.

In step 8 (S8), the program obtains a correlation coefficient of two parameters among the extracted parameters regarding the claims. Table 4 shows correlation coefficients rₐ1 to rₐ36 based on the parameters extracted from the scope of claims at the time of the patent application or the application publication, and Table 5 shows correlation coefficients r_{b}1 to r_{b}36 based on the parameters extracted from the scope of claims at the time of the patent allowance or the patent registration.

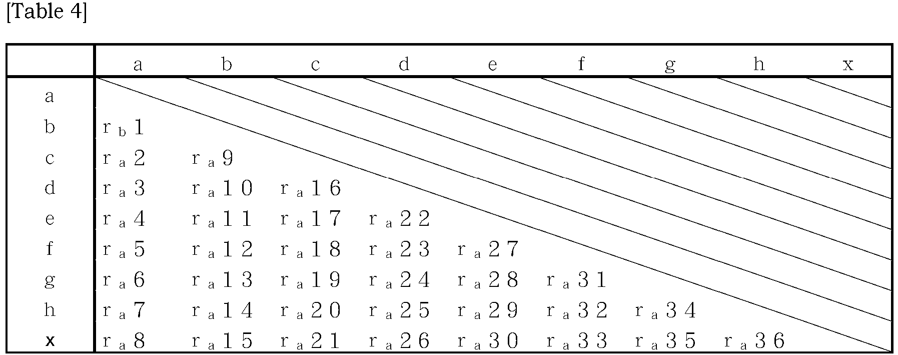

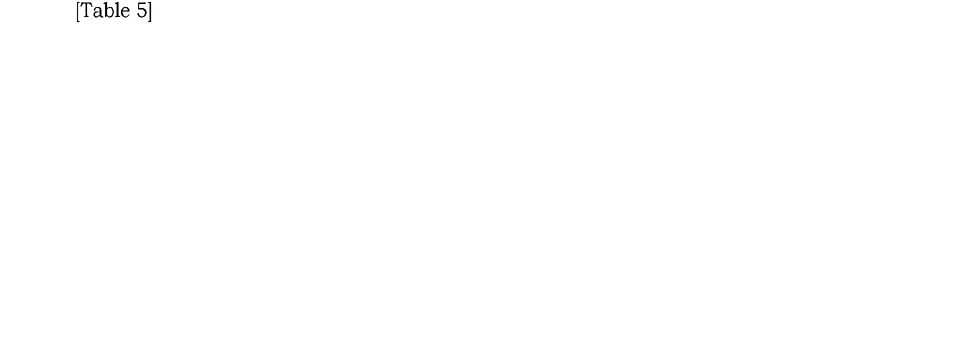

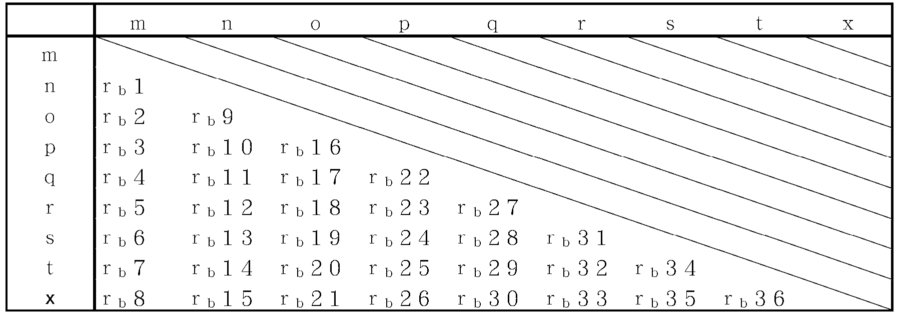

In step 9 (S9), evaluation is performed based on numerical values obtained by S3, S4, S5, S6, S7, and S8. In this case, it is preferable to perform a same calculation in advance for a benchmark applicant or patentee, or a designated product, a designated technology, or a designated service, or perform evaluation by comparison with stored benchmark data, according to information to be obtained.

Table 6 shows calculated values and parameters to be targets of evaluation for each of coverage (C), technical understanding (U), practical accuracy (P), robustness (R), and basic inventiveness (B).

The coverage (C) is an evaluation index relating to how much a maximum scope of a patent right is covered. Since it relates to breadth of a right, for example, parameters related to a number of independent claims such as a total number of independent claims (c and o), a maximum number of independent claims within a same claim category (e and q), and a total number of independent claims in a specified claim category (g and s) are mainly involved. However, since a scope of rights is limited by a prior art document or a cited document, it is desirable to add a ratio to a number of cited documents x in addition to the parameters related to the number of independent claims described above to the evaluation of coverage (C) in order to obtain a maximum scope of rights according to the number of the cited documents. The coverage (C) shows that a maximum scope of rights is obtained or attempted to be obtained while a scope of rights of a patent that can be obtained is limited by a cited document, a prior art document, or the like, and it is considered to be a major part of competitiveness of a patent.

The technical understanding (U) is, for example, evaluation of whether or not understanding of a prior art document or a cited document and grasping of content are performed and reflected in a claim. Specifically, a correlation coefficient between a number of cited documents (x) and a number of independent claims such as a total number of independent claims (c and o), a maximum number of independent claims within a same claim category (e and q), and a total number of independent claims in a specified claim category (g and s) is used as an index.

The practical accuracy (P) is evaluated preferably based on a number of specified terms (S) and a ratio of the number of specified terms (S) to a number of limited elements (L). A reason for this is that, in claim preparation, for example, when describing a relationship between limited elements, a specified term such as "the," "the said," "said," "this," "the above," or "the aforementioned" is attached before an already-appeared limiting element to describe a relationship with a new limiting element; therefore, the number of specified terms (S) and the ratio of the number of specified terms (S) to the number of limiting elements (L) are considered to be an index of accuracy of description of a relationship between limiting elements.

The robustness (R) is, preferably, an index of resistance to a claim of patent invalidity or a petition for patent cancellation. This is because, for example, in order to prepare for a claim of patent invalidity or a petition for patent cancellation, it is important whether or not understanding of a prior art document or a cited document and grasping of content are performed and then a dependent claim is appropriately arranged. Therefore, it is reflected in a correlation coefficient between a number of cited documents (x) and a total number of dependent claims (d or p) or a total number of dependent claims within a specified claim category (h or t).

The basic inventiveness (B) corresponds to, for example, being a type of discovery of new knowledge. Specifically, it is, for example, evaluation of an existence of description of a specific numerical value, that is, a quantitative expression, in an embodiment or an example. For example, it may be obtained as a ratio of a patent application or a patent having a quantitative expression in an embodiment or an example among the patent gazette or the published patent application extracted in S2 (hereinafter referred to as the extracted patent gazette or the like), for each specified applicant or right holder, or each specified technology or product.

**[Table 6]**

| SYMBOL | DESCRIPTION | MAINLY RELATED PARAMETERS AND NUMERICAL VALUES |
|---|---|---|
| C | COVERAGE | c, o, e, q, g, s, x/c, x/o, x /e, x/q, x/g, x/s 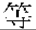 |
| U | TECHNICAL UNDERSTANDING | CORRELATION COEFFICIENT (X-C, X-O, X-E, X-Q, X-G, X-S, AND THE LIKE) |
| P | PRACTICE ACCURACY | S, S/L, AND THE LIKE |
| R | ROBUSTNESS | CORRELATION COEFFICIENT (X-D, X-P, X-H, X-T, AND THE LIKE) |
| B | BASIC INVENTIVENESS | RATIO OF PATENT HAVING QUANTITATIVE EXPRESSION IN EMBODIMENT OR EXAMPLE IN SPECIFIC TECHNICAL FIELD |

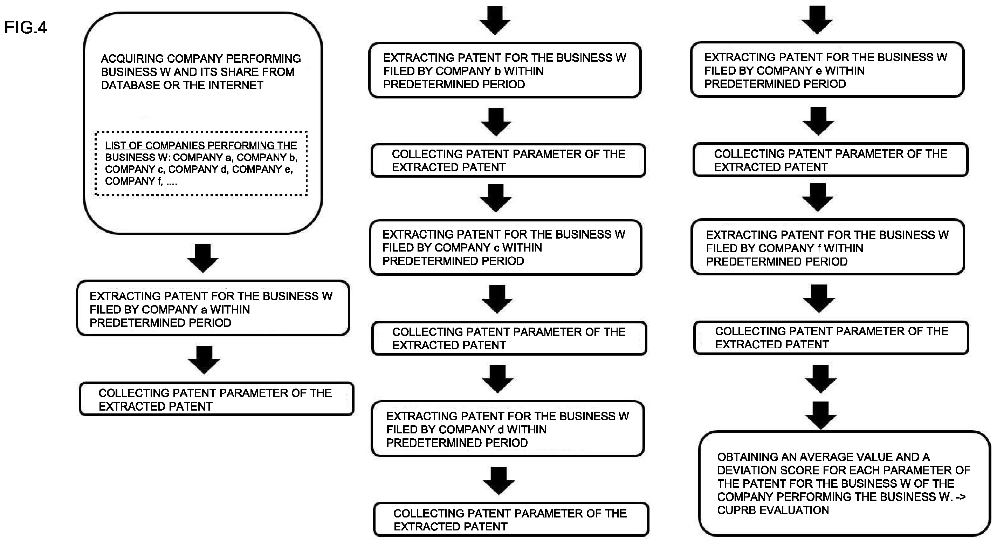

FIG. 4 shows a program example for scoring each element of coverage (C), technical understanding (U), practical accuracy (P), robustness (R), and basic inventiveness (B). First, the program according to the embodiment specifies company a, company b, company c, company d, company e, and company f, which are companies implementing business W, and shares thereof using a database or the Internet. Next, for each of company a, company b, company c, company d, company e, and company f, the program extracts a patent application or a patent related to business W filed within a predetermined period. The patent application and the patent related to business W mean, for example, those in which a claim category of a product or a utility or a service related to business W is included in a scope of claims.

Next, regarding the extracted patent application or patent, when a patent application is an extraction target, the program collects, for example, typical parameters: a total number of claims (a), a total number of claim categories (b), a total number of independent claims (c), a total number of dependent claims (d), a maximum number of independent claims within a same claim category (e), a total number of claims in a specified claim category (f), a total number of all independent claims in the specified claim category (g), and a total number of all dependent claims in the specified claim category (h). When a patent is the extraction target, the program collects, for example, typical parameters: a total number of claims (m), a total number of claim categories (n), a total number of independent claims (o), a total number of dependent claims (p), a maximum number of independent claims within a same claim category (q), a total number of claims in a specified claim category (r), a total number of all independent claims in the specified claim category (s), and a total number of all dependent claims in the specified claim category (t). Also, the program collects a number of cited documents (x) cited by an examiner in examination of a patent to be an extraction target. When the extraction target is a patent application that has not yet become a patent, the number of cited documents (x) can be grasped from a patent corresponding to the patent application.

For each of company a, company b, company c, company d, company e, and company f, the program counts a number of specified terms (terms such as "the," "the said," "said," "the above," "the aforementioned," and "this" which specify a preceding term) and a number of limiting elements (verbs, nouns, adjectives, and adverbs) other than the specified terms in the claim.

Scoring of each element of coverage (C), technical understanding (U), practical accuracy (P), robustness (R), and basic inventiveness (B) can be performed, for example, by performing a same evaluation for a magnitude of a difference from a benchmark or for a set of a certain scale based on a correspondence table between coverage (C), technical understanding (U), practical accuracy (P), robustness (R), and basic inventiveness (B) and parameters or data processed from parameters shown in Table 6, and performing evaluation with a deviation score or the like.

FIG. 5 shows visualization of evaluation results regarding coverage (C), technical understanding (U), practical accuracy (P), robustness (R), and basic inventiveness (B) as a radar chart. By visualizing in this way, it becomes possible to visually grasp a patent and a patent application from a plurality of viewpoints.

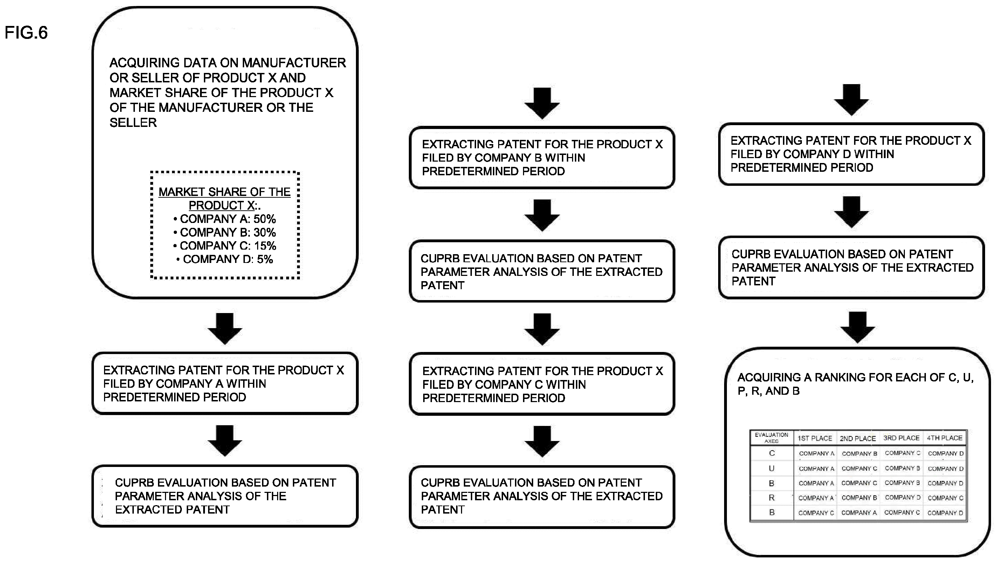

FIG. 6 shows an example in which the program according to the embodiment is applied to market share. First, the program acquires data of a manufacturer or a seller of product X and a market share of product X of the manufacturer or the seller. The program extracts a patent application or a patent filed during a predetermined period having company A, company B, company C, and company D, which are the extracted manufacturer or seller, as an applicant or a right holder. Here, the predetermined period may be, for example, a period from a start of a development period of product X, which is a target of investigation, to an end of sales. Alternatively, the program according to the embodiment can set the predetermined period according to, for example, a product life cycle such as an introduction period, a growth period, a maturity period, and a decline period. For each of company A, company B, company C, and company D, the program collects parameters as shown in Table 1 for the extracted patent applications or patents, calculates a ratio between the parameters or a correlation coefficient between the parameters, and ranks company A, company B, company C, and company D for each of coverage (C), technical understanding (U), practical accuracy (P), robustness (R), and basic inventiveness (B).

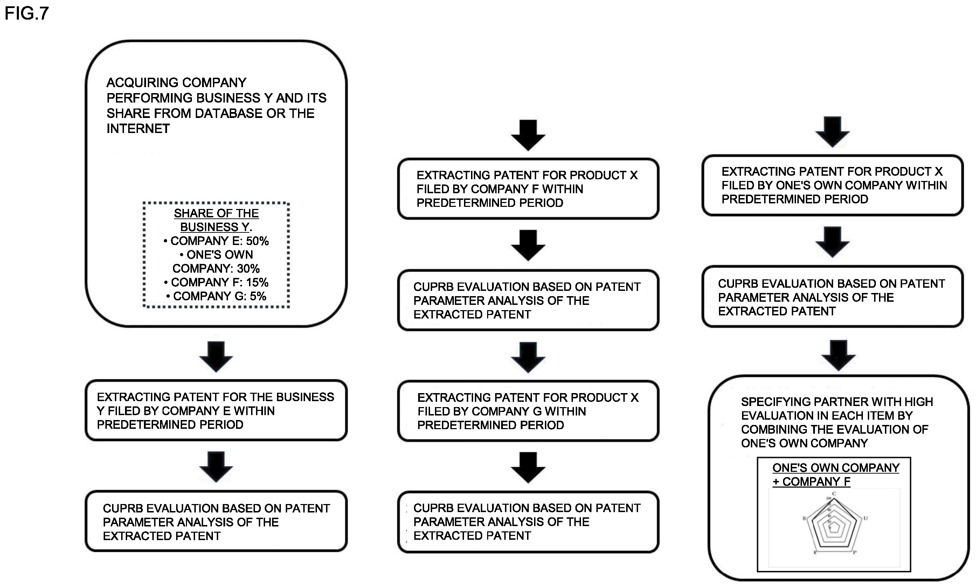

FIG. 7 shows an example in which the program according to the embodiment is used for extracting a company to be acquired. The program acquires a company implementing business Y, which is implemented by one's own company, and a share thereof from a database or the Internet. Next, for each of company E, company F, company G, and the one's own company, which are implementing companies of business Y, the program extracts a patent or a patent application related to business Y filed in a predetermined period, and collects the parameters shown in Table 1. Further, the program calculates a ratio between the parameters or a correlation coefficient between the parameters, performs evaluation of coverage (C), technical understanding (U), practical accuracy (P), robustness (R), and basic inventiveness (B), and creates a radar chart by adding a result of parameter analysis of the one's own company and a result of parameter analysis of each of company E, company F, and company G. By this, it can be determined which company among company E, company F, and company G should be acquired to achieve high evaluation in a desired evaluation axis among items of coverage (C), technical understanding (U), practical accuracy (P), robustness (R), and basic inventiveness (B).

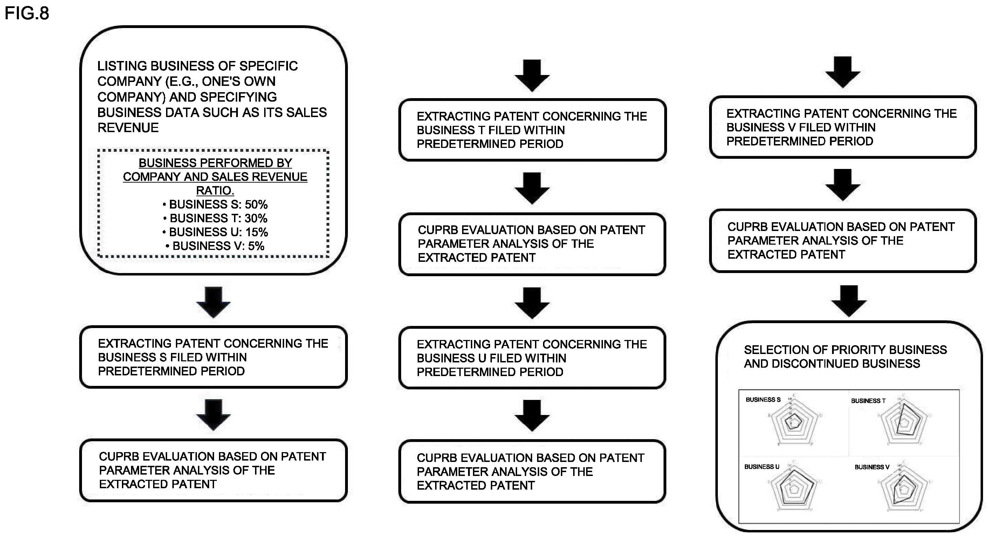

FIG. 8 shows a case where the program according to the embodiment is used for reorganization or abolition of business in a company. First, the program extracts a patent application or a patent related to business S, business T, business U, and business V of a specific company or one's own company. For the extracted patent application or patent, the program collects, for example, the parameters shown in Table 1, and further obtains, for example, a ratio between a plurality of parameters or a correlation coefficient between a plurality of parameters as shown in Table 2, Table 3, Table 4, and Table 5. Evaluation of coverage (C), technical understanding (U), practical accuracy (P), robustness (R), and basic inventiveness (B) (CUPRB evaluation) is performed based on the parameters and calculation results described above. By this, it is possible to specify a business having a patent portfolio with high competitiveness or a business having a patent portfolio capable of maintaining a high share. Regarding a business having no particular strength from a viewpoint of a patent portfolio, a judgment such as transfer to another company or business discontinuation can be made.

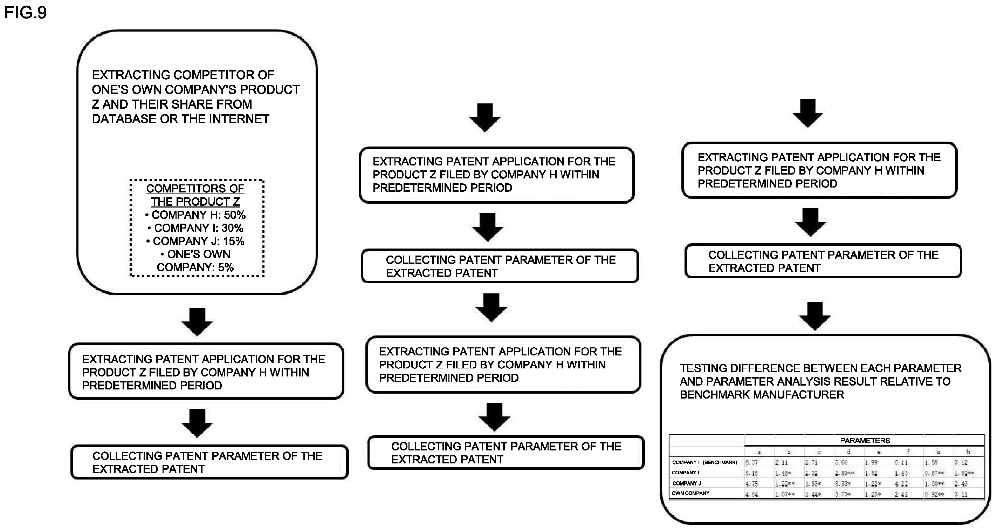

FIG. 9 shows a case where the program according to the embodiment is used for grasping strengths and weaknesses in a patent portfolio against a competitor. The program acquires a competitor of product Z of one's own company and a share thereof from a database or the Internet. The program collects the parameters shown in Table 1 regarding patent applications or patents having the acquired company H, company I, and company J as an applicant or a right holder. For example, the program further obtains a ratio between a plurality of parameters or a correlation coefficient between a plurality of parameters as shown in Table 2, Table 3, Table 4, and Table 5. At this time, a statistical test is performed as to whether a parameter or a result of parameter analysis of the one's own company is different from company H as a benchmark, and analysis of the one's own company is performed.

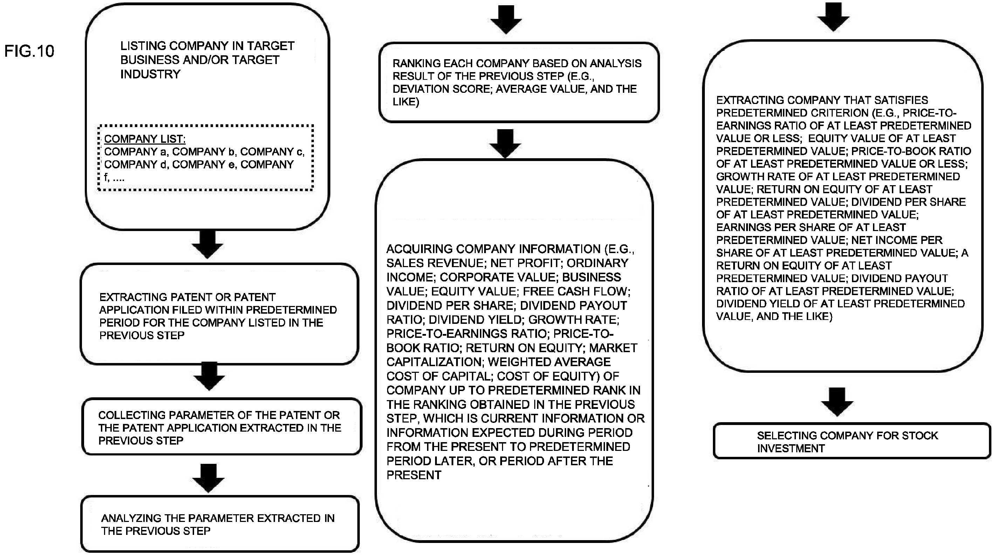

FIG. 10 is a diagram for explaining a program using a result of evaluation of a patent or a patent application regarding selection of a target company for investment, financing, stock trading, bond trading, or M&A according to some aspects of the present invention. Basically, at least a part of any of the above-mentioned programs can be used for the evaluation of the patent or the patent application.

A typical operation of the program is as follows.

In a first step, listing of companies in a target business and/or a target industry is performed. Note that listing conditions such as a number of companies to be listed, nationality, and corporate scale can be appropriately set.

In a second step, a patent or a patent application filed within a predetermined period of the companies listed in the first step is extracted. The above-mentioned predetermined period can be appropriately selected on the program or manually, but for example, a patent or a patent application to be extracted is typically one for which a patent application was made in a period from five years before to one and a half years before a scheduled date for performing investment, financing, stock trading, bond trading, or M&A, and more typically, one for which a patent application was made in a period from three years before to one and a half years before a scheduled date for performing investment. Those to be extracted may be a patent or a patent application, or both a patent and a patent application.

In a third step, parameter collection of the patent or the patent application extracted in the second step is performed. The above-mentioned parameter is typically, for example, at least one of: a total number of claims, a total number of claim categories, a total number of independent claims, a total number of dependent claims, a maximum number of independent claims within a same claim category regarding a scope of claims; a total number of claims in a claim category same as or related to a specified designated product, a designated technology, or a designated service, a total number of independent claims in the claim category same as or related to the specified designated product, the designated technology, or the designated service, and a total number of dependent claims in the claim category same as or related to the specified designated product, the designated technology, or the designated service; a total number of limiting elements which is a number of limiting elements of a claim, and a total number of specified terms which is a number of specified terms used for specifying an already-appeared limiting element of the claim and describing a relationship with another limiting element; and an existence or a number of a quantitative expression in the scope of claims or a specification.

In a fourth step, analysis of the above-mentioned parameter extracted in the third step is performed.

In a fifth step, a result of the above-mentioned analysis is output for each company typically as statistical data such as, for example, a deviation score, an average value, and a correlation coefficient, and ranking is performed.

In a sixth step, based on the ranking performed in the fifth step, the program acquires company information of companies up to a predetermined rank in the ranking, the information being current or expected at a time after a predetermined period from now or during a period after a predetermined period from now. The company information is typically, for example, sales, net income, ordinary income, corporate value, business value, stock value, free cash flow, dividend amount per share, payout ratio, dividend yield, growth rate, price-to-earnings ratio, price-to-book ratio, return on equity, ordinary income, market capitalization, weighted average cost of capital, return on shareholder equity, cost of shareholder equity, earnings per share, and net income per share, and two or more of these pieces of company information may be acquired.

In a seventh step, the program extracts a company satisfying a predetermined determination criterion. As the above-mentioned determination criterion, typically, for example, a price-to-earnings ratio of a predetermined value or more or a predetermined value or less, a stock value of a predetermined value or more, a price-to-book ratio of a predetermined value or more or a predetermined value or less, a growth rate of a predetermined value or more, a return on equity of a predetermined value or more, a dividend amount per share of a predetermined value or more, an earnings per share of a predetermined value or more, a net income per share of a predetermined value or more, a return on shareholder equity of a predetermined value or more, a payout ratio of a predetermined value or more, and a dividend yield of a predetermined value or more can be cited. Even in the above-mentioned determination criteria, a price-to-earnings ratio and a price-to-book ratio are known as PER (Price Earnings Ratio) and PBR (Price Book-value Ratio), respectively, and are indices by which it is determined that a value is more undervalued as the value is lower, and they are preferably used especially as a determination criterion for stock investment.

In an eighth step, the program outputs a company satisfying the predetermined determination criterion of the seventh step as a target company for investment, financing, stock trading, bond trading, or M&A.

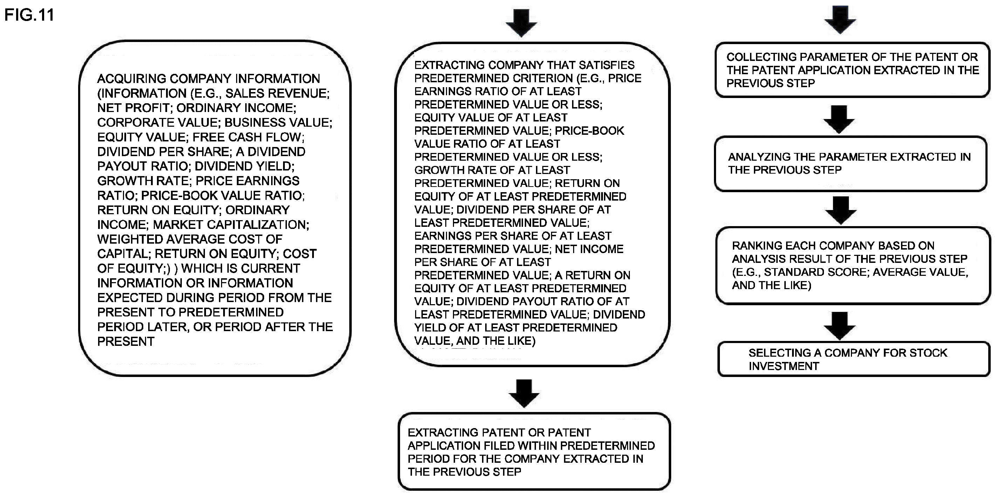

FIG. 11 is a diagram for explaining a program using a result of evaluation of a patent or a patent application regarding selection of a target company for investment, financing, stock trading, bond trading, or M&A according to some aspects of the present invention. The program is different from the program described using FIG. 10 basically in that an order of analysis based on company information and parameter analysis of a patent or a patent application is changed. Specifically, after performing a step of extracting a target candidate for investment, financing, stock trading, bond trading, or M&A based on company information, analysis based on a patent and a patent application is performed, and a target company for investment, financing, stock trading, bond trading, or M&A is determined.

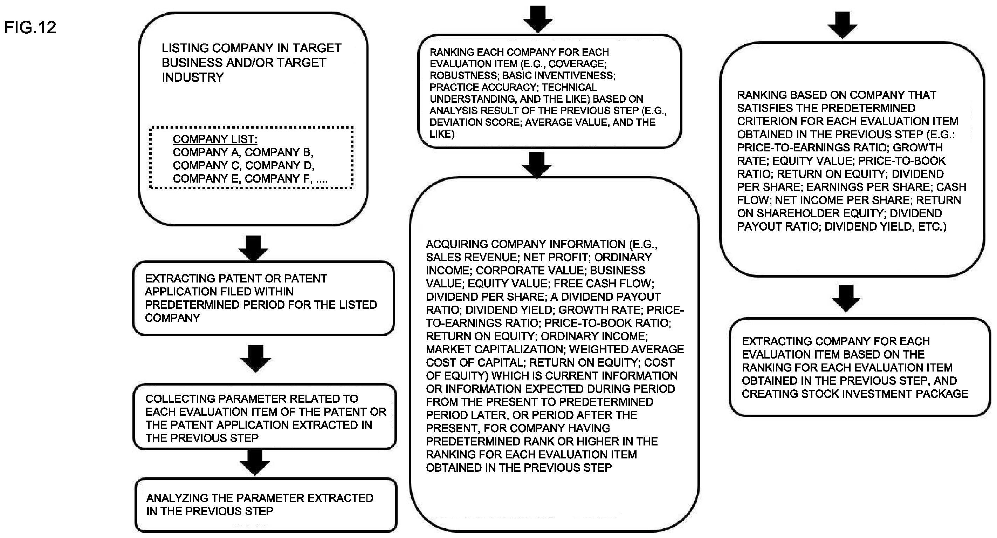

FIG. 12 is a diagram for explaining a program using a result of evaluation of a patent or a patent application regarding selection of a target company for investment, financing, stock trading, bond trading, or M&A according to some aspects of the present invention. Specifically, the program extracts a plurality of target companies for investment, financing, stock trading, bond trading, or M&A based on ranking for each evaluation item in parameter analysis of a patent or a patent application. By this, for example, it is possible to create one stock investment package.

A typical operation of the program is as follows.

In a first step, listing of companies in a target business and/or a target industry is performed. Note that listing conditions such as a number of companies to be listed, nationality, and corporate scale can be appropriately set.

In a second step, a patent or a patent application filed within a predetermined period of the companies listed in the first step is extracted. The above-mentioned predetermined period can be appropriately selected on the program or manually, but for example, a patent or a patent application to be extracted is typically one for which a patent application was made in a period from five years before to one and a half years before a scheduled date for performing investment, financing, stock trading, bond trading, or M&A, and more typically, one for which a patent application was made in a period from three years before to one and a half years before a scheduled date for performing investment. Those to be extracted may be a patent or a patent application, or both a patent and a patent application.

In a third step, parameter collection related to each evaluation item of the patent or the patent application extracted in the second step is performed. An evaluation item is typically, for example, evaluation of coverage (C), technical understanding (U), practical accuracy (P), robustness (R), and basic inventiveness (B) (CUPRB evaluation) as shown in Fig. 5. Among these, the coverage (C) becomes an index of a high growth rate of a company because a company having a high share in a growth period of a market after establishment of a dominant design of a product or a service shows a relatively high value. On the other hand, the robustness (R) becomes an index of stability of a company because a company having a high share in a stable period of a market shows a relatively high value.

The above-mentioned parameter is typically, for example, at least one of: a total number of claims, a total number of claim categories, a total number of independent claims, a total number of dependent claims, a maximum number of independent claims within a same claim category regarding a scope of claims; a total number of claims in a claim category same as or related to a specified designated product, a designated technology, or a designated service, a total number of independent claims in the claim category same as or related to the specified designated product, the designated technology, or the designated service, and a total number of dependent claims in the claim category same as or related to the specified designated product, the designated technology, or the designated service; a total number of limiting elements which is a number of limiting elements of a claim, and a total number of specified terms which is a number of specified terms used for specifying an already-appeared limiting element of the claim and describing a relationship with another limiting element; and an existence or a number of a quantitative expression in the scope of claims or a specification.

In a fourth step, analysis of the above-mentioned parameter extracted in the third step is performed.

In a fifth step, a result of the above-mentioned analysis is output for each company typically as statistical data such as, for example, a deviation value, an average value, and a correlation coefficient for each evaluation item, and ranking is performed.

In a sixth step, based on the ranking for each evaluation item performed in the fifth step, the program acquires company information of companies up to a predetermined rank in the ranking, the information being current or expected at a time after a predetermined period from now or during a period after a predetermined period from now. The company information is typically, for example, sales, net income, ordinary income, corporate value, business value, stock value, free cash flow, dividend amount per share, payout ratio, dividend yield, growth rate, price-to-earnings ratio, price-to-book ratio, return on equity, ordinary income, market capitalization, weighted average cost of capital, return on shareholder equity, cost of shareholder equity, earnings per share, and net income per share, and two or more of these pieces of company information may be acquired.

In a seventh step, the program extracts a company satisfying a predetermined determination criterion for each evaluation item. As the above-mentioned determination criterion, typically, for example, a price-to-earnings ratio of a predetermined value or more or a predetermined value or less, a stock value of a predetermined value or more, a price-to-book ratio of a predetermined value or more or a predetermined value or less, a growth rate of a predetermined value or more, a return on equity of a predetermined value or more, a dividend amount per share of a predetermined value or more, an earnings per share of a predetermined value or more, a net income per share of a predetermined value or more, a return on shareholder equity of a predetermined value or more, a payout ratio of a predetermined value or more, and a dividend yield of a predetermined value or more can be cited. Even in the above-mentioned determination criteria, a price-to-earnings ratio and a price-to-book ratio are known as PER (Price Earnings Ratio) and PBR (Price Book-value Ratio), respectively, and are indices by which it is determined that a value is more undervalued as the value is lower, and they are preferably used especially as a determination criterion for stock investment.

In an eighth step, the program outputs a company satisfying the predetermined determination criterion of the seventh step as a target of investment such as stock investment, financing, stock trading, bond trading, or a target company of M&A for each evaluation item. Note that a number of companies or the like to be a target of stock investment for each evaluation item can be appropriately determined according to risk, return, and the like of a set stock investment package. For example, when importance is placed on growth potential, a larger number of companies with a high rank in coverage (C) can be included as a stock investment target, and when importance is placed on stability rather than risk, a larger number of companies with a high rank in robustness (R) can be included as a stock investment target.

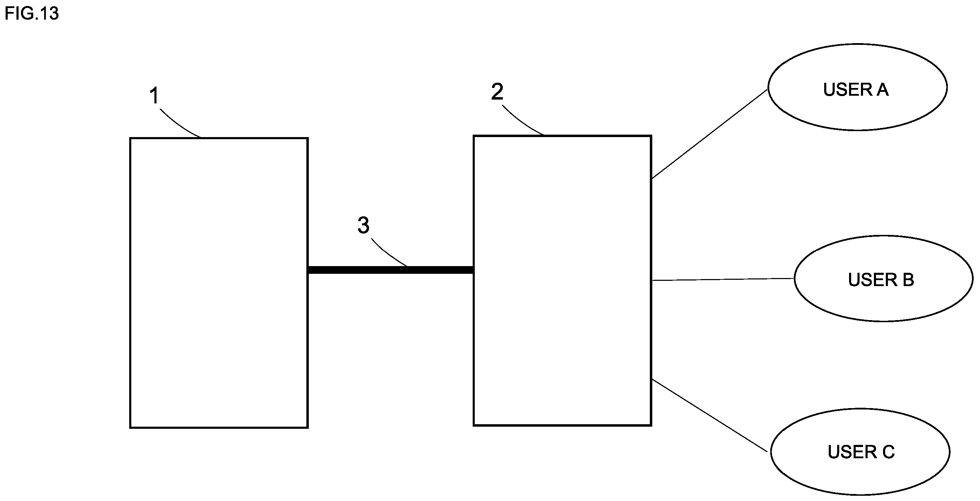

FIG. 13 shows a device configuration according to some aspects of the present invention. In FIG. 13, reference numerals 1 to 3 indicate a patent database, an information processing device, and a network line, respectively. Here, the information processing device 2 is equipped with a program according to some aspects of the present invention. By connecting to the patent database 1 via the network line 3 using the information processing device 2, evaluation results obtained using the above-mentioned program can be acquired. User A, user B, and a user who have concluded a usage contract for the information processing device 2 can browse, and for example, can perform a judgment of M&A, a lawsuit, a patent negotiation, stock trading, bond trading, financing, or due diligence at a time of listing based on information browsed or output.

### Reference Signs List

1: patent database, 2: information processing device, 3: network line

## Claims

1. A program comprising a first data collection step of collecting, for a plurality of patent gazettes, a plurality of published patent applications, or a plurality of published Japanese translations of a PCT international publication that are converted into electronic data, at least one first parameter among a plurality of first parameters consisting of: a total number of claims, a total number of claim categories, a total number of independent claims, and a total number of dependent claims regarding a scope of claims of each of the gazettes or the applications; a maximum number of independent claims within the same claim category; a total number of claims in a claim category that is the same as or related to a specified designated product, a specified designated technology, or a specified designated service; a total number of independent claims in the claim category that is the same as or related to the specified designated product, the specified designated technology, or the specified designated service; and a total number of dependent claims in the claim category that is the same as or related to the specified designated product, the specified designated technology, or the specified designated service.

2. The program according to claim 1, further comprising a specifying step of specifying an applicant or a patentee for each of the plurality of patent gazettes, the published patent applications, or the published Japanese translations of a PCT international publication.

3. The program according to claim 1, further comprising a first extraction step of extracting the plurality of patent gazettes, the plurality of published patent applications, or the plurality of published Japanese translations of a PCT international publication as those whose applicant or patentee is a specified company, individual, or institution.

4. The program according to claim 1, further comprising a second data collection step of collecting, as a second parameter, a number of cited documents, which is a number of prior art documents cited in examination at a patent office for a plurality of patent applications corresponding to the plurality of patent gazettes, the plurality of published patent applications, or the plurality of published Japanese translations of a PCT international publication.

5. The program according to claim 1, further comprising a specifying step of specifying the designated product or the designated service based on a company, an individual, or an institution to be investigated, or a product manufactured or sold, or a service performed by the company, the individual, or the institution to be investigated.

6. The program according to claim 1, further comprising a selection step of selecting the designated product or the designated service based on an investigation result from an electronic database or the Internet regarding a company, an individual, or an institution to be investigated, or a product manufactured or sold, or a service performed by the company, the individual, or the institution to be investigated.

7. The program according to claim 4, further comprising a first calculation step of calculating, as a third parameter, a p-value regarding a correlation between the second parameter and a value of the at least one first parameter.

8. The program according to claim 4, further comprising a second calculation step of calculating, as a fourth parameter, a correlation coefficient regarding a correlation between the second parameter and a value of the at least one first parameter.

9. The program according to claim 4, further comprising a third calculation step of calculating, as a fifth parameter, a ratio between the second parameter and the at least one first parameter.

10. The program according to claim 1, wherein
the plurality of patent gazettes, the plurality of published patent applications, or the plurality of published Japanese translations of a PCT international publication include at least a plurality of first patent gazettes, a plurality of first published patent applications, or a plurality of first published Japanese translations of a PCT international publication belonging to a first group, and a plurality of second patent gazettes, a plurality of second published patent applications, or a plurality of second published Japanese translations of a PCT international publication belonging to a second group, and
the program includes a first test step of testing for a significant difference between the first group and the second group with respect to the at least one first parameter.

11. The program according to claim 4, wherein
the plurality of patent gazettes, the plurality of published patent applications, or the plurality of published Japanese translations of a PCT international publication include at least a plurality of first patent gazettes, a plurality of first published patent applications, or a plurality of first published Japanese translations of a PCT international publication belonging to a first group, and a plurality of second patent gazettes, a plurality of second published patent applications, or a plurality of second published Japanese translations of a PCT international publication belonging to a second group, and
the program includes a second test step of testing for a significant difference between the first group and the second group with respect to the second parameter.

12. The program according to claim 7, wherein
the plurality of patent gazettes, the plurality of published patent applications, or the plurality of published Japanese translations of a PCT international publication include at least a plurality of first patent gazettes, a plurality of first published patent applications, or a plurality of first published Japanese translations of a PCT international publication belonging to a first group, and a plurality of second patent gazettes, a plurality of second published patent applications, or a plurality of second published Japanese translations of a PCT international publication belonging to a second group, and
the program includes a third test step of testing for a significant difference between the first group and the second group with respect to the third parameter.

13. The program according to claim 8, wherein
the plurality of patent gazettes, the plurality of published patent applications, or the plurality of published Japanese translations of a PCT international publication include at least a plurality of first patent gazettes, a plurality of first published patent applications, or a plurality of first published Japanese translations of a PCT international publication belonging to a first group, and a plurality of second patent gazettes, a plurality of second published patent applications, or a plurality of second published Japanese translations of a PCT international publication belonging to a second group, and
the program includes a fourth test step of testing for a significant difference between the first group and the second group with respect to the fourth parameter.

14. The program according to claim 9, wherein
the plurality of patent gazettes, the plurality of published patent applications, or the plurality of published Japanese translations of a PCT international publication include at least a plurality of first patent gazettes, a plurality of first published patent applications, or a plurality of first published Japanese translations of a PCT international publication belonging to a first group, and a plurality of second patent gazettes, a plurality of second published patent applications, or a plurality of second published Japanese translations of a PCT international publication belonging to a second group, and
the program includes a fifth test step of testing for a significant difference between the first group and the second group with respect to the fifth parameter.

15. The program according to claim 1, wherein
the program includes a second extraction step of extracting the plurality of patent gazettes, the plurality of published patent applications, or the published Japanese translations of a PCT international publication as those corresponding to a patent targeted in a patent infringement lawsuit filed in a court or a trial request or a petition to a patent office.

16. The program according to claim 1, wherein
the program includes a third extraction step of extracting a target patent that is a patent targeted in a plurality of patent infringement lawsuits filed in a court or trial requests or petitions to a patent office using an electronic database or the Internet, and extracting the plurality of patent gazettes, the plurality of published patent applications, or the published Japanese translations of a PCT international publication as those corresponding to the target patent.

17. The program according to any one of claims 10 to 14, wherein
the program includes a fourth extraction step of extracting an applicant of the plurality of first patent gazettes, the plurality of first published patent applications, or the plurality of first published Japanese translations of a PCT international publication as a first applicant; and
a fifth extraction step of extracting an applicant of the plurality of second patent gazettes, the plurality of second published patent applications, or the plurality of second published Japanese translations of a PCT international publication as a second applicant.

18. The program according to claim 1, wherein
the program includes a storage step of storing at least a part of an implementation process or a result of the first data collection step.

19. The program according to claim 2, wherein
the program includes a storage step of storing at least a part of an implementation process or a result of the specifying step.

20. The program according to claim 3, wherein
the program includes a storage step of storing at least a part of an implementation process or a result of the first extraction step.

21. The program according to claim 4, wherein
the program includes a storage step of storing at least a part of an implementation process or a result of the second data collection step.

22. The program according to claim 5, wherein
the program includes a storage step of storing at least a part of an implementation process or a result of the specifying step.

23. The program according to claim 6, wherein
the program includes a storage step of storing at least a part of an implementation process or a result of the selection step.

24. The program according to claim 7, wherein
the program includes a storage step of storing at least a part of an implementation process or a result of the first calculation step.

25. The program according to claim 8, wherein
the program includes a storage step of storing at least a part of an implementation process or a result of the second calculation step.

26. The program according to claim 9, wherein
the program includes a storage step of storing at least a part of an implementation process or a result of the third calculation step.

27. The program according to claim 10, wherein
the program includes a storage step of storing at least a part of an implementation process or a result of the first test step.

28. The program according to claim 11, wherein
the program includes a storage step of storing at least a part of an implementation process or a result of the second test step.

29. The program according to claim 12, wherein
the program includes a storage step of storing at least a part of an implementation process or a result of the third test step.

30. The program according to claim 13, wherein
the program includes a storage step of storing at least a part of an implementation process or a result of the fourth test step.

31. The program according to claim 14, wherein
the program includes a storage step of storing at least a part of an implementation process or a result of the fifth test step.

32. The program according to claim 15, wherein
the program includes a storage step of storing at least a part of an implementation process or a result of the second extraction step.

33. The program according to claim 16, wherein
the program includes a storage step of storing at least a part of an implementation process or a result of the third extraction step.

34. The program according to claim 17, wherein
the program includes a storage step of storing at least a part of an implementation process or a result of the fourth extraction step.

35. The program according to claim 17, wherein
the program includes a storage step of storing at least a part of an implementation process or a result of the fifth extraction step.

36. The program according to any one of claims 18 to 34, wherein
at least a part of the implementation process or the result of the storage step is used as benchmark or reference data.

37. The program according to any one of claims 10 to 14, wherein
the program executes analysis or analytical study using at least one first data obtained for the plurality of first patent gazettes, the plurality of first published patent applications, or the plurality of first published Japanese translations of a PCT international publication as a benchmark for at least one second data obtained for the plurality of second patent gazettes, the plurality of second published patent applications, or the plurality of second published Japanese translations of a PCT international publication.

38. A program comprising:
an extraction step of extracting, using an electronic database or the Internet, a plurality of target patents that are patents targeted in a plurality of patent infringement lawsuits filed in a court or a plurality of trial requests or a plurality of petitions to a patent office;
an identification step of identifying, among the plurality of target patents, a plurality of winning patents that are patents targeted in patent infringement lawsuits in which a patent right holder won, or a plurality of maintained patents that are patents maintained in the plurality of trial requests or the plurality of petitions, and a plurality of losing patents that are patents targeted in patent infringement lawsuits in which the patent right holder lost, or a plurality of invalidated patents that are patents not maintained in the plurality of trial requests or the plurality of petitions;
an extraction step of extracting a plurality of first patent gazettes, a plurality of first published patent applications, or a plurality of first published Japanese translations of a PCT international publication corresponding to the plurality of winning patents or the plurality of maintained patents;
an extraction step of extracting a plurality of second patent gazettes, a plurality of second published patent applications, or a plurality of second published Japanese translations of a PCT international publication corresponding to the plurality of losing patents or the plurality of invalidated patents;
a collection step of collecting at least one first parameter among a plurality of first parameters consisting of: a total number of claims, a total number of claim categories, a total number of independent claims, a total number of dependent claims regarding a scope of claims of the plurality of first patent gazettes, the plurality of first published patent applications, or the plurality of first published Japanese translations of PCT international publications, a maximum number of independent claims within the same claim category, a total number of claims in a claim category the same as or related to a specified designated product, a specified designated technology, or a specified designated service, a total number of independent claims in the claim category the same as or related to the specified designated product, the specified designated technology, or the specified designated service, and a total number of dependent claims in the claim category the same as or related to the specified designated product, the specified designated technology, or the specified designated service; or collecting, as a second parameter, a number of cited documents that is a number of prior art documents cited in examination at a patent office for the plurality of first patent gazettes, the plurality of first published patent applications, or the plurality of first published Japanese translations of PCT international publications; and
a collection step of collecting the at least one first parameter or the second parameter for the plurality of second patent gazettes, the plurality of second published patent applications, or the plurality of second published Japanese translations of a PCT international publication.

39. The program according to claim 37, wherein
the program obtains, as a third parameter, a p-value regarding a correlation between the second parameter and a value of the at least one first parameter for the plurality of first patent gazettes, the plurality of first published patent applications, or the plurality of first published Japanese translations of a PCT international publication and the plurality of second patent gazettes, the plurality of second published patent applications, or the plurality of second published Japanese translations of a PCT international publication.

40. The program according to claim 37, wherein
the program obtains, as a fourth parameter, a correlation coefficient regarding a correlation between the second parameter and a value of the at least one first parameter for the plurality of first patent gazettes, the plurality of first published patent applications, or the plurality of first published Japanese translations of a PCT international publication and the plurality of second patent gazettes, the plurality of second published patent applications, or the plurality of second published Japanese translations of a PCT international publication.

41. The program according to any one of claims 37 to 39, wherein
the program performs a significant difference test between the plurality of first patent gazettes, the plurality of first published patent applications, or the plurality of first published Japanese translations of a PCT international publication and the plurality of second patent gazettes, the plurality of second published patent applications, or the plurality of second published Japanese translations of a PCT international publication with respect to the at least one first parameter or the second parameter.

42. The program according to any one of claims 37 to 40, wherein
the program calculates, as a fifth parameter, a ratio between the second parameter and the at least one first parameter for the plurality of first patent gazettes, the plurality of first published patent applications, or the plurality of first published Japanese translations of a PCT international publication and the plurality of second patent gazettes, the plurality of second published patent applications, or the plurality of second published Japanese translations of a PCT international publication; and
performs a significant difference test between the plurality of first patent gazettes, the plurality of first published patent applications, or the plurality of first published Japanese translations of a PCT international publication and the plurality of second patent gazettes, the plurality of second published patent applications, or the plurality of second published Japanese translations of a PCT international publication with respect to the fifth parameter.

43. A program comprising a first step of collecting, for a plurality of first patent gazettes, a plurality of first published patent applications, or a plurality of first published Japanese translations of a PCT international publication converted into electronic data of a first applicant or a first patentee, a value of a first parameter that is at least one parameter selected from a total number of claims, a total number of claim categories, a total number of independent claims, a total number of dependent claims of a scope of claims of each of them, a maximum number of independent claims within the same claim category, a total number of claims in a claim category the same as or related to a designated technology or a designated service, a total number of independent claims in the claim category the same as or related to a specified designated product, the designated technology, or the designated service, and a total number of dependent claims in the claim category the same as or related to the specified designated product, the designated technology, or the designated service; and
a second step of collecting, for a plurality of second patent gazettes, a plurality of second published patent applications, or a plurality of second published Japanese translations of a PCT international publication converted into electronic data of a second applicant or a second patentee, a value of a second parameter that is at least one parameter selected from a total number of claims, a total number of claim categories, a total number of independent claims, a total number of dependent claims of a scope of claims of each of them, a maximum number of independent claims within the same claim category, a number of independent claims in a claim category the same as or related to a specified designated product, a designated technology, or a designated service, and a number of dependent claims in the claim category the same as or related to the specified designated product, the designated technology, or the designated service.

44. The program according to claim 42, wherein
the program includes a third step of performing a significant difference test regarding a difference between a value of the first parameter collected in the first step and a value of the second parameter collected in the second step.

45. The program according to claim 42 or 43, wherein
when the first parameter is a total number of claims of the plurality of first patent gazettes, the plurality of first published patent applications, or the plurality of first published Japanese translations of a PCT international publication, the second parameter is a total number of claims of the plurality of second patent gazettes, the plurality of second published patent applications, or the plurality of second published Japanese translations of a PCT international publication;
when the first parameter is a total number of claim categories of the plurality of first patent gazettes, the plurality of first published patent applications, or the plurality of first published Japanese translations of a PCT international publication, the second parameter is a total number of claim categories of the plurality of second patent gazettes, the plurality of second published patent applications, or the plurality of second published Japanese translations of a PCT international publication;
when the first parameter is a total number of independent claims of the plurality of first patent gazettes, the plurality of first published patent applications, or the plurality of first published Japanese translations of a PCT international publication, the second parameter is a total number of independent claims of the plurality of second patent gazettes, the plurality of second published patent applications, or the plurality of second published Japanese translations of a PCT international publication;
when the first parameter is a total number of dependent claims of the plurality of first patent gazettes, the plurality of first published patent applications, or the plurality of first published Japanese translations of a PCT international publication, the second parameter is a total number of dependent claims of the plurality of second patent gazettes, the plurality of second published patent applications, or the plurality of second published Japanese translations of a PCT international publication;
when the first parameter is a maximum number of independent claims within the same claim category of the plurality of first patent gazettes, the plurality of first published patent applications, or the plurality of first published Japanese translations of a PCT international publication, the second parameter is a maximum number of independent claims within the same claim category of the plurality of second patent gazettes, the plurality of second published patent applications, or the plurality of second published Japanese translations of a PCT international publication;
when the first parameter is a total number of claims in a claim category the same as or related to a specified designated product, a designated technology, or a designated service of the plurality of first patent gazettes, the plurality of first published patent applications, or the plurality of first published Japanese translations of a PCT international publication, the second parameter is a total number of claims in a claim category the same as or related to the specified designated product, the designated technology, or the designated service of the plurality of second patent gazettes, the plurality of second published patent applications, or the plurality of second published Japanese translations of a PCT international publication; and
when the first parameter is a total number of dependent claims in a claim category the same as or related to a specified designated product, a designated technology, or a designated service of the plurality of first patent gazettes, the plurality of first published patent applications, or the plurality of first published Japanese translations of a PCT international publication, the second parameter is a total number of dependent claims in a claim category the same as or related to the specified designated product, the designated technology, or the designated service of the plurality of second patent gazettes, the plurality of second published patent applications, or the plurality of second published Japanese translations of a PCT international publication.

46. A program comprising a first step of specifying a first company, a first individual, or a first institution performing sales or manufacture of a designated product or performing a designated service specified by a user, and a market share of the first company, the first individual, or the first institution by using a first database converted into electronic data or an Internet search;
a second step of extracting a plurality of first patent gazettes, a plurality of first published patent applications, or a plurality of first published Japanese translations of a PCT international publication that include, in a scope of claims, a claim having a claim category the same as or related to the designated product or the designated service and having the first company, the first individual, or the first institution as a first applicant or a patentee from a second database converted into electronic data or the Internet search; and
a third step of collecting, for the plurality of first patent gazettes, the plurality of first published patent applications, or the plurality of first published Japanese translations of a PCT international publication, a value of at least one parameter among a total number of claims, a total number of claim categories, a total number of independent claims, a total number of dependent claims of a scope of claims of each of them, a maximum number of independent claims within the same claim category, a total number of claims in a claim category the same as or related to a designated technology or a designated service, a total number of independent claims in the claim category the same as or related to the specified designated product, the designated technology, or the designated service, and a total number of dependent claims in the claim category the same as or related to the specified designated product, the designated technology, or the designated service.

47. The program according to claim 46, wherein
the program includes a fourth step of specifying a market share of a second company, a second individual, or a second institution different from the first company, the first individual, or the first institution performing sales or manufacture of the designated product or performing the designated service by using a third database converted into electronic data or the Internet search;
a fifth step of collecting, for a plurality of second patent gazettes or a plurality of second published patent applications, a value of at least one parameter among a total number of claims, a total number of claim categories, a total number of independent claims, a total number of dependent claims of a scope of claims of each of the plurality of second patent gazettes, the plurality of second published patent applications, or the published Japanese translations of a PCT international publication extracted based on the fourth step, a maximum number of independent claims within the same claim category, a total number of claims in a claim category the same as or related to the designated technology or the designated service, a total number of independent claims in the claim category the same as or related to the specified designated product, the designated technology, or the designated service, and a total number of dependent claims in the claim category the same as or related to the specified designated product, the designated technology, or the designated service; and
a sixth step of performing a significant difference test regarding a difference between a value of the at least one parameter collected in the third step and a value of the at least one parameter collected in the fifth step.

48. A program collecting, from a scope of claims of each of a plurality of patent gazettes, a plurality of published patent applications, or a plurality of published Japanese translations of a PCT international publication converted into electronic data, at least one of a total number of limiting elements that is a number of limiting elements of a claim, and a total number of specified terms that is a number of specified terms used for specifying an already-appeared limiting element of the claim and describing a relationship with another limiting element.

49. The program according to claim 47, wherein
the program collects both the total number of limiting elements and the total number of specified terms.

50. The program according to claim 47, wherein
collection of at least one of the total number of limiting elements and the total number of specified terms is implemented for an independent claim of the scope of claims.

51. A program comprising a first step of collecting, for a plurality of first patent gazettes, a plurality of first published patent applications, or a plurality of first published Japanese translations of a PCT international publication converted into electronic data of a first applicant or a first patentee, at least one parameter among a total number of limiting elements that is a number of limiting elements of a claim of a scope of claims of each of them, and a total number of specified terms that is a number of specified terms used for specifying an already-appeared limiting element of the claim and describing a relationship with another limiting element;
a second step of collecting, for a plurality of second patent gazettes, a plurality of second published patent applications, or a plurality of second published Japanese translations of a PCT international publication converted into electronic data of a second applicant or a second patentee, from a scope of claims of each of them, at least one parameter among a total number of limiting elements that is a number of limiting elements of a claim, and a total number of specified terms that is a number of specified terms used for specifying an already-appeared limiting element of the claim and describing a relationship with another limiting element; and
a third step of performing a significant difference test regarding a difference between a value of the at least one parameter collected in the first step and a value of the at least one parameter collected in the second step.

52. The program according to claim 50, wherein
the program collects both the total number of limiting elements and the total number of specified terms in the first step, and collects both the total number of limiting elements and the total number of specified terms in the second step.

53. The program according to claim 50 or 51, wherein
the program includes a fourth step of performing a significant difference test regarding a difference between a ratio of the number of limiting elements to the number of specified terms collected in the first step and a ratio of the number of limiting elements to the number of specified terms collected in the second step.

54. A program comprising a specifying step of specifying a company or the like that specifies a company, an individual, or an institution having a possibility of selling or transferring at least a part of a business to another company, individual, or institution, or a company, an individual, or an institution having a possibility of acquiring or receiving at least a part of a business from another company, individual, or institution, or a company for identifying a possibility of becoming a target for investment, financing, stock trading, or bond trading;
a patent-gazette-or-like extraction step of extracting a plurality of patent gazettes, a plurality of published patent applications, or a plurality of published Japanese translations of a PCT international publication including a scope of claims each containing a claim category the same as or related to a designated product, a designated technology, or a designated service that is a product, a technology, or a service related to at least the part of the business; and
a first parameter collection step of implementing a first collection step of collecting, for the plurality of patent gazettes, the plurality of published patent applications, or the plurality of published Japanese translations of a PCT international publication, at least one first parameter among a plurality of first parameters consisting of a total number of claims, a total number of claim categories, a total number of independent claims, a total number of dependent claims, a maximum number of independent claims within the same claim category, a total number of claims in a claim category the same as or related to a designated technology or a designated service, a total number of independent claims in the claim category the same as or related to a specified designated product, the designated technology, or the designated service, and a total number of dependent claims in the claim category the same as or related to the specified designated product, the designated technology, or the designated service.

55. The program according to claim 54, wherein
the program includes a second parameter collection step of collecting, as a second parameter, a number of cited documents that is a number of prior art documents cited in examination at a patent office for a plurality of patent applications corresponding to the plurality of patent gazettes, the plurality of published patent applications, or the plurality of published Japanese translations of a PCT international publication.

56. The program according to claim 54, wherein
the program includes a first calculation step of calculating, as a third parameter, a p-value regarding a correlation between the second parameter and a value of the at least one first parameter.

57. The program according to claim 54, wherein
the program includes a second calculation step of calculating, as a fourth parameter, a correlation coefficient regarding a correlation between the second parameter and a value of the at least one first parameter.

58. The program according to claim 54, wherein
the program implements a third calculation step of calculating a ratio between the second parameter and the at least one first parameter as a fifth parameter.

59. The program according to claim 53, wherein
the program includes a first evaluation step of evaluating the company, the individual, or the institution specified by the specifying step using the at least one first parameter as an evaluation criterion.

60. The program according to claim 54, wherein
the program includes a first evaluation step of evaluating the company, the individual, or the institution specified by the specifying step using the second parameter as an evaluation criterion.

61. The program according to claim 55, wherein
the program includes a first evaluation step of evaluating the company, the individual, or the institution specified by the specifying step using the third parameter as an evaluation criterion.

62. The program according to claim 56, wherein
the program includes a first evaluation step of evaluating the company, the individual, or the institution specified by the specifying step using the fourth parameter as an evaluation criterion.

63. The program according to claim 57, wherein
the program includes a first evaluation step of evaluating the company, the individual, or the institution specified by the specifying step using the fifth parameter as an evaluation criterion.

64. The program according to any one of claims 58 to 62, wherein
the first evaluation step includes a comparison with a result obtained by a second evaluation step performed on a benchmark company, individual, or institution.

65. A program comprising a specifying step of specifying a company or the like that specifies a company, an individual, or an institution having a possibility of selling or transferring at least a part of a business to another company, individual, or institution, or a company, an individual, or an institution having a possibility of acquiring or receiving at least a part of a business from another company, individual, or institution;
a patent-gazette-or-like extraction step of extracting a plurality of patent gazettes, a plurality of published patent applications, or a plurality of published Japanese translations of a PCT international publication including a scope of claims each containing a claim category the same as or related to a designated product, a designated technology, or a designated service that is a product, a technology, or a service related to at least the part of the business; and
a collection step of collecting, from a scope of claims of each of the plurality of patent gazettes, the plurality of published patent applications, or the plurality of published Japanese translations of a PCT international publication, at least one of a total number of limiting elements that is a number of limiting elements of a claim, and a total number of specified terms that is a number of specified terms used for specifying an already-appeared limiting element of the claim and describing a relationship with another limiting element.

66. The program according to claim 64, wherein
in the collection step, the total number of limiting elements and the total number of specified terms are implemented for a claim of the claim category.

67. The program according to claim 64 or 65, wherein
the program collects both the total number of limiting elements and the total number of specified terms.

68. The program according to any one of claims 64 to 66, wherein
collection of at least one of the total number of limiting elements and the total number of specified terms is implemented for an independent claim of the scope of claims.

69. The program according to any one of claims 64 to 67, wherein
the program includes a calculation step of calculating a ratio of the total number of limiting elements to the total number of specified terms.

70. The program according to any one of claims 64 to 68, wherein
the program includes a test step of performing a significant difference test between at least one of the number of limiting elements and the number of specified terms for a benchmark company, individual, or institution and at least one of the number of limiting elements and the number of specified terms obtained by the collection step for the company, the individual, or the institution specified in the specifying step.

71. The program according to claim 68, wherein
the program includes a test step of performing a significant difference test between the ratio for a benchmark company, individual, or institution and the ratio obtained by the calculation step for the company, the individual, or the institution specified in the specifying step.

72. A program comprising a step of specifying an existence or a number of a description based on an experimental result regarding at least one of a scope of claims, an embodiment, and an example for each of a plurality of patent gazettes, a plurality of published patent applications, or a plurality of published Japanese translations of a PCT international publication converted into electronic data.

73. A program comprising a step of specifying an existence or a number of a description of a numerical value regarding at least one of a scope of claims, an embodiment, and an example for each of a plurality of patent gazettes, a plurality of published patent applications, or a plurality of published Japanese translations of a PCT international publication converted into electronic data.

74. A program comprising a step of specifying an existence or a number of a description of a numerical value based on an experimental result regarding at least one of a scope of claims, an embodiment, and an example for each of a plurality of patent gazettes, a plurality of published patent applications, or a plurality of published Japanese translations of a PCT international publication converted into electronic data.

75. A program comprising a first step of collecting, for a plurality of patent gazettes, a plurality of published patent applications, or a plurality of published Japanese translations of a PCT international publication, at least one first parameter among a plurality of first parameters consisting of a total number of claims, a total number of claim categories, a total number of independent claims, a total number of dependent claims, a maximum number of independent claims within the same claim category, a total number of claims in a claim category the same as or related to a specified designated product, a designated technology, or a designated service, a total number of independent claims in the claim category the same as or related to the specified designated product, the designated technology, or the designated service, and a total number of dependent claims in the claim category the same as or related to the specified designated product, the designated technology, or the designated service;
a second step of collecting, as a second parameter, a number of cited documents that is a number of prior art documents cited in examination at a patent office for a plurality of patent applications corresponding to the plurality of patent gazettes, the plurality of published patent applications, or the plurality of published Japanese translations of a PCT international publication;
a third step of collecting, from a scope of claims of each of the plurality of patent gazettes, the plurality of published patent applications, or the plurality of published Japanese translations of a PCT international publication, at least one of a total number of limiting elements that is a number of limiting elements of a claim, and a total number of specified terms that is a number of specified terms used for specifying an already-appeared limiting element of the claim and describing a relationship with another limiting element; and
a fourth step of specifying an existence or a number of a description based on an experimental result or a description of a numerical value in a scope of claims, an embodiment, or an example for each of the plurality of patent gazettes, the plurality of published patent applications, or the plurality of published Japanese translations of a PCT international publication.

76. The program according to claim 74, wherein
the program includes a fifth step of extracting the plurality of patent gazettes, the plurality of published patent applications, or the plurality of published Japanese translations of a PCT international publication so as to include a plurality of first patent gazettes, a plurality of first published patent applications, or a plurality of first published Japanese translations of a PCT international publication having a first applicant or a first patentee as an applicant or a patentee, and a plurality of second patent gazettes, a plurality of second published patent applications, or a plurality of second published Japanese translations of a PCT international publication having a second applicant or a second patentee as an applicant or a patentee; and
a sixth step of comparing a result obtained in at least one of the first step, the second step, the third step, and the fourth step, or an evaluation based on the result, between the plurality of first patent gazettes, the plurality of first published patent applications, or the plurality of first published Japanese translations of a PCT international publication and the plurality of second patent gazettes, the plurality of second published patent applications, or the plurality of second published Japanese translations of a PCT international publication.

77. The program according to claim 74, wherein
the program includes a seventh step of performing scoring of a result obtained in at least one of the first step, the second step, the third step, and the fourth step, or scoring of an evaluation based on the result.

78. The program according to claim 76, wherein
in the seventh step, the scoring is performed using a deviation score.

79. The program according to claim 74, wherein
the program includes an eighth step of implementing at least one of the first step, the second step, the third step, and the fourth step for each patent gazette, published patent application, or published Japanese translations of a PCT international publication containing a claim category the same as or related to an applicant or a patentee or a designated product, a designated technology, or a designated service of the plurality of patent gazettes, the plurality of published patent applications, or the plurality of published Japanese translations of a PCT international publication, and obtaining a deviation score for each of the applicant or the patentee or for each of the designated product, the designated technology, or the designated service.

80. The program according to claim 75, wherein
the program includes a ninth step of visualizing a result of the seventh step.

81. A program comprising the features of the program according to claim 1, 37, 50, 53, 64, or 74; and a function for collecting corporate information.

82. A program comprising a parameter collection step of collecting at least one parameter from at least one of a scope of claims and a specification of a patent or a patent application;
an analysis step of analyzing the at least one parameter obtained by the parameter collection step; and
a company selection step of selecting a target company for investment, financing, stock trading, bond trading, or M&A, or creating a package of an investment product, based at least on a result obtained from the analysis step.

83. A program comprising a parameter collection step of collecting at least one parameter from each of a plurality of patent gazettes, a plurality of published patent applications, or a plurality of published Japanese translations of a PCT international publication converted into electronic data; and
a company information collection step of collecting company information of at least a part of companies described as an applicant in the plurality of patent gazettes, the plurality of published patent applications, or the plurality of published Japanese translations of a PCT international publication.

84. The program according to claim 82, wherein
the program includes a parameter analysis step of performing analysis of the at least one parameter collected by the parameter collection step; and
a company output step of outputting a company described as an applicant in a patent gazette, a published patent application, or a published Japanese translations of a PCT international publication that has obtained an evaluation of at least a predetermined value or more in at least one evaluation item by the parameter analysis step.

85. The program according to claim 83, wherein
the program includes a selection step of selecting a company output by the company output step as a target company for financing, investment, stock trading, bond trading, or M&A.

86. The program according to claim 82, wherein
the program includes a company evaluation step of performing company evaluation based on company information obtained by the company information collection step; and
a company extraction step of extracting a company having a predetermined value or more in at least one evaluation item as a criterion by the company evaluation step, wherein
the parameter collection step is performed for a company extracted by the company extraction step.

87. The program according to claim 85, wherein
the program includes a parameter analysis step of performing analysis of the at least one parameter collected by the parameter collection step; and
a company output step of outputting a company having a predetermined value or more in at least one evaluation item by the parameter analysis step.

88. A program comprising: a parameter collection step of collecting a plurality of parameters from a plurality of patent gazettes, a plurality of published patent applications, or a plurality of published Japanese translations of a PCT international publication converted into electronic data;
a company information collection step of collecting company information of at least a part of companies described as an applicant in the plurality of patent gazettes, the plurality of published patent applications, or the plurality of published Japanese translations of a PCT international publication;
a data analysis step of analyzing the plurality of parameters collected by the parameter collection step and implementing evaluation of a plurality of evaluation items regarding the plurality of patent gazettes, the plurality of published patent applications, or the plurality of published Japanese translations of a PCT international publication; and
a company selection step of selecting at least one company regarding each of the plurality of evaluation items or regarding two or more evaluation items.

89. The program according to claim 87, wherein
a company selected by the company selection step is a company that has obtained a score of a predetermined value or more in each evaluation item in the data analysis step.

90. A device comprising the program according to claim 1, 37, 50, 53, 64, 74, 80, 81, 82, or 87.

91. A patent evaluation method, a method for selecting a target company for investment, financing, stock trading, bond trading, or M&A, or a due diligence method, wherein
a user implements a part of the program according to claim 1, 37, 50, 53, 64, 74, 80, 81, 82, or 87.
